(19)

Europäisches
Patentamt

European
Patent Office

Office européen
des brevets

(11) **EP 3 358 728 A1**

(12) **EUROPEAN PATENT APPLICATION**

(43) Date of publication:
    **08.08.2018 Bulletin 2018/32**

(51) Int Cl.:
    ***H02K 99/00*** $^{(2014.01)}$

(21) Application number: **18154781.1**

(22) Date of filing: **01.02.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN** | (71) Applicant: **Banduric, Richard Aurora, Colorado 80013 (US)**<br><br>(72) Inventor: **Banduric, Richard Aurora, Colorado 80013 (US)**<br><br>(74) Representative: **Driver, Virginia Rozanne Page White & Farrer Bedford House John Street London WC1N 2BF (GB)** |
| (30) Priority: **01.02.2017   US 201715422270**<br>         **31.05.2017   AU 2017203604**<br>         **18.07.2017   US 201715653130** | |

(54) **COMPLEX ELECTRIC FIELDS AND STATIC ELECTRIC FIELDS TO EFFECT MOTION WITH CONDUCTION CURRENTS AND MAGNETIC MATERIALS**

(57)    In an example, a method includes interacting electric fields from charges in conductors in different inertial reference frames to effect motion. The example method implements the mathematical framework that divides electric fields from charges in different inertial reference frames into separate electric field equations in electrically isolated conductors. The example method may implement the interaction of these electric fields to produce a force on an assembly that can, by way of illustration, propel a spacecraft using electricity without other propellant(s).

## Fig. 4

Description

PRIORITY CLAIM

This application claims priority to Australia Patent Application No. 2017203604 titled "Complex Electric Fields and Static Electric Fields to Effect Motion With Conduction Currents and Magnetic Materials" of Richard Banduric filed May 31, 2017. U.S. Patent Application No. 15/422,270 titled "Complex Electric Fields and Static Electric Fields To Effect Motion With Conduction Currents" of Richard Banduric filed February 1, 2017, and US Patent Application No. 15/653,130 titled "Complex Electric Fields and Static Electric Fields to Effect Motion with Conduction Current and Magnetic Materials", each hereby incorporated by reference for all that is disclosed as though fully set forth herein.

BACKGROUND

Electromagnetics is a vector based mathematical framework used in physics and electrical engineering. This mathematical framework can be considered to have two coupled fields known as the magnetic field and electric field. This mathematical framework was originally formulated in the 1860's to treat these fields as separate independent fields.
These separate fields have been shown to be coupled together by James Maxwell through the mathematical construct of the complex-quaternion. Einstein demonstrated that the electric field was a primary field and the magnetic field that was created to describe these magnetic forces was really the results of the interaction of electric fields from charges in two different inertial frames of references in a conductor or magnetic material. This has created a mathematical framework that now is incomplete at describing all the forces from charges in relative motion that can be exploited to effect motion.

SUMMARY

The inventor has devised a new mathematical framework which takes into account the interaction between charges in different inertial reference frames. This has enabled the possibility of inducing motion in an assembly or unitary body by supplying an electric current through two aligned conductors, or between a conductor and a magnet. The interaction of electric fields generated in the aligned conductors enables the force to be produced on the assembly such as may be able to propel a space craft using only electricity and without any propellant.
One aspect of the invention provides a method comprising:

providing in an assembly a first conductor of a first shape and a second conductor of a second shape that is different from the first shape, wherein the first and second conductors are stationary relative to one another and electrically isolated from one another;
supplying an electrical current to each of the first and second conductors from respective independent electrically isolated power sources, whereby a first force experienced by the first conductor from the current flowing through the second conductor is different from a second force experienced by the second conductor from the current flowing through the first conductor, thereby producing in the assembly a different force capable of causing motion of the assembly.

The assembly may be a solid unitary body in which the first and second conductors are fixedly arranged and to which the independent electrically isolated power sources are fixedly connected. The assembly could comprise for example a solid block of epoxy or other containing material in which the conductors are arranged.
Each conductor may be elongate with a cross-sectional dimension which has a shape such that the thickness of the conductor is a small fraction of its width. Furthermore, the conductors may be elongate so that the thickness is an even smaller fraction of the length of the conductors. In this context, small means very small, for example less than 1% or less than 0.1%. The aim is to make the conductors as thin as practical, while having a width which is as large as practical that still guarantees that the electrical current is uniform across the face of the conductor. Ribbon conductors would be suitable, which are extremely thin but with a width which greatly exceeds the thickness, and which can extend over a long length. A ribbon conductor may have a rectangular cross-section. Conductors having square cross-sections may also be suitable.
In one embodiment the first and second conductors are arranged alongside each other with their lengths extending parallel, and spaced apart by a distance which is as small as possible but which does not permit for the conductors to be electrically connected to each other or to allow a charge to leak from the first conductor to the second conductor.
In one embodiment, the shape of the first conductor is such that an elongated surface is flat, and the shape of the second conductor is such that its elongated surface is non flat, e.g. round or curved or non-smooth or textured in some way. This provides a spatial difference and a charge-behavioral difference between the first and second conductors which causes the force differential. The manner in which the difference force is created is described in more detail in the following where the new mathematical framework is explained.

In one embodiment, the first conductor is made of a first type of conductive material and the second conductor is made of a second different type of conductive material. In such a case, the first type of conductive material may have an electron drift velocity or charge mobility that is greater than the second different type of conductive material. In one example, the first type of conductive material is graphene and the second type of conductive material is copper or conductive silver epoxy.

In order for the different forces to be sufficiently large to have a practical effect, the first and second conductors may be electrically isolated from one another. In one embodiment they are isolated by separating them with a material of high dielectric constant, such as Kapton.

The electric field differences that produce forces that can be used for propulsion are amplified by having more electric charge to "push against" or "interacting with" these electric field differences in the wire conductors resulting from the electric currents in the wires. By having a high dielectric constant material in between the conductors, a greater charge can be placed on the wires. This may be applied by a third power source that has an infinite source impedance like a Wilmshurst or electrostatic high voltage generator to increase the amount of electric charge that can be used to produce differential forces.

Alternative shapes for the second conductor may be a conductive sphere, a conductive half sphere, a conductive oval, a conductive curve shape, a conductive non-smooth surface, or a curved or rippled surface covered with milli/micro/nano conductive spheres or platelets on the surface. Alternatively, such spheres or platelets could be embedded in the wire conductor.

Another aspect of the invention provides a unitary body comprising:

a housing; at least one first conductor of a first shape fixedly mounted with respect to the housing; at least one second conductor of a second shape different to the first shape fixedly mounted to the housing and spaced from the first conductor by a fixed distance; a first power source fixedly mounted with respect to the housing and connected to cause an electric current to flow through the first conductor; a second power source electrically isolated from the first power source and fixedly mounted with respect to the housing, the second power source connected to cause an electric current to flow through the second conductor, wherein the distance between the first and second conductors is such that the first conductor experiences a first force as a result of an electric field from the current in the second conductor and the second conductor experiences a second force as a result of an electric field from the current in the first conductor which is different to the first force, whereby a net force, being the difference between the first and second forces, causes motion of the unitary body.

In one arrangement, the first and second conductors are elongated conductors which are arranged in parallel such that a long surface of the first conductor faces a long surface of the second conductor and is spaced apart by the fixed distance.

In one embodiment, there are multiple elongate first conductors arranged in parallel in a plane of first conductors, and multiple elongate second conductors arranged in parallel in the second plane of second conductors, the first and second planes being arranged such that the surfaces of the first conductors face surfaces of the second conductors and are spaced apart by the fixed distance. Multiple conductors provide greater net forces.

The first conductors and second conductors may be arranged alongside each other in parallel or perpendicular to the directions of the first and second conductors with the first and second conductors being spaced apart by a distance small enough to keep the first conductor from being electrically connected and to allow no charge to leak from the first conductor to the second conductor.

A sheet of an electric insulator may be placed between the first and second planes to electrically isolate the first conductors from the second conductors.

Means may be provided associated with the unitary body to electrically isolate the first and second power sources.

The present disclosure further provides an arrangement in which motion of an assembly can be caused by a combination of a conductor and a magnet, instead of two conductors as outlined above.

One aspect of this arrangement provides a method comprising:

providing in an assembly a conductor and a magnet, wherein the conductor and the magnet are stationary relative to one another, and located relative to one another to experience a respective force; supplying an electric current to the conductor whereby a first force experienced by the conductor from the magnet is different from a second force experienced by the magnet from the conductor with the current flowing through it, thereby producing in the assembly a difference force capable of causing motion of the assembly.

The conductor may have the same size and configuration as in the arrangement discussed above with first and second conductors. That is, the conductor may be elongate with a cross-sectional dimension which has a thickness that is a fraction of its width and a smaller fraction of its length, the width of the conductor being sized such that the electrical current is uniform across the surface of the conductor.

The magnet may be a bar magnet with a cross sectional area which is larger than the cross sectional area of the conductor. Of preference, the magnet should be as thick as is practical.

The conductor and the magnet should preferably be spaced apart by a distance that is as close as is practical but not so close as to allow any electric charge from the conductor to leak into the magnet.

The conductor and the magnet may be made of different materials. The magnet may be made of magnetic material or a material with some aligned magnetic moments. The material for the conductor may be selected from copper, graphene, Nicrome and a superconductor. The material for the magnet may be selected from alnico magnets, bonded magnets, ceramic (ferrite) magnets, neodymium iron boron magnets, Samarian cobalt magnets, magnetic material assemblies or ferromagnetic magnets. Super conducting magnets may be utilized using an expanded embodiment of a ribbon wire to replace a square wire magnet.

The cross-sectional shape of the conductor may be a flat ribbon wire with smooth faces where the faces are aligned parallel with the faces of the magnet or perpendicular with the faces of the magnet.

The conductor and the magnet may be electrically isolated by separating them with a material of high dielectric constant, such as Kapton.

The conductor and the magnet may be charged by a third power source that has an infinite source impedance, for example Wilmshurst or electrostatic high voltage generator, to increase the amount of electric charge that can be used to produce the net force.

Another aspect of the arrangement provides a unitary body comprising:

a housing;
at least one conductor fixedly mounted with respect to the housing;
at least one magnet fixedly mounted with respect to the housing and spaced from the conductor by a fixed distance;
a power source fixedly mounted with respect to the housing and connected to cause an electric current to flow through the conductor, wherein the distance between the conductor and the magnet is such that the conductor experiences a first force as a result of an electric field from the magnet, and the magnet experiences a second force as a result of an electric field from the current in the conductor which is different to the first force, whereby a net force, being the difference between the first and second forces, causes motion of the unitary body.

The unitary body may comprise multiple elongate conductors which are arranged in parallel such that a long surface of each of the first of the conductors faces a long surface of a bar magnet.

In a different arrangement, which uses the first and second conductors (rather than a conductor and a magnet), the first and second conductors could in principle be the same shape but formed of different materials. Therefore, in one aspect there is provided a unitary body comprising:

a housing;
at least one first conductor of a first type of conductive material fixedly mounted with respect to the housing;
at least one second conductor of a second type of conductive material different to the first type of conductive material, the second conductor fixedly mounted to the housing and spaced from the first conductor by a fixed distance;
a first power source fixedly mounted with respect to the housing and connected to cause an electric current to flow through the first conductor;
a second power source electrically isolated from the first power source and fixedly mounted with respect to the housing, the second power source connected to cause an electric current to flow through the second conductor, wherein the distance between the first and second conductors is such that the first conductor experiences a first force as a result of an electric field from the current in the second conductor and the second conductor experiences a second force as a result of an electric field from the current in the first conductor which is different to the first force, whereby a net force, being the difference between the first and second forces, causes motion of the unitary body.

For a better understanding of the present invention, and to show how the same may be carried into effect, reference will now be made by way of example to the accompanying drawings.

## BRIEF DESCRIPTION OF THE DRAWINGS

**FIGS. 1A and 1B** illustrate a wire conductor with no electric current, wherein (A) is a wire conductor end view, and (B) is a wire conductor side view.

**FIG. 2** illustrates a round wire with an electric current.

**FIGS. 3A and 3B** illustrate an electric field from a round wire with an electric current, wherein (A) is a wire conductor end view, and (B) is a wire conductor side view.

**FIG. 4** illustrates an electric force between two round conductors with an electric current.

**FIG. 5** illustrates a magnetic force between two conductors.

**FIGS. 6A, 6B, 6C and 6D** illustrate conductors having an electric field due to a current, wherein (A) is a square conductive wire with an electric current with flat faces, (B) is a square wire end view, (C) is a square wire side view, and (D) is a round wire end view.

**FIGS. 7A and 7B** illustrate interacting electric fields from two conductors, wherein (A) is a wire conductor perspective view, and (B) is a wire conductor end view.

**FIGS. 8A, 8B and 8C** illustrate a cutaway view of an example assembly of two planes of wire conductors with power supplies and wiring diagram, wherein (A) is an edge view of the wires in a non-conductive frame, (B) is a top view of round wires in a non-conductive frame, and (C) is a top view of square wires in a non-conductive frame.

**FIG. 9** illustrates an example electrical schematic of two planes of wire conductors with power supplies.

**FIG. 10** illustrates an example assembly that is powered producing an external force.

**FIG. 11** illustrates a relativistic field difference from the charges in a magnetic material with aligned magnetic moments, where 11A is an end view of a magnet, 11B is a side view of a magnet and 11C is a sketch showing dipole moments.

**FIG. 12** illustrates a relativistic field difference from the charges in a magnetic material with aligned magnetic moments that can be amplified in one direction and not another.

**FIG. 13** illustrate the different forces that a plane of copper conductors and a block of magnetic material experience.

**FIGS. 14A, 14B and 14C** illustrate a cutaway view of an example assembly of one plane of wire conductors and a magnetic block with power supplies and wiring diagram, wherein (A) is an edge view of the wires in a non-conductive frame, (B) is a top view of conductive wires in a non-conductive frame, and (C) is an angled view of magnetic material with aligned magnetic moments.

**FIG. 15** illustrates an example electrical schematic of one plane of wire conductors and a magnet with power supplies and shielding example.

**FIG. 16** illustrates an example assembly that is powered producing an external force.

**FIG. 17A and 17B** show examples of the wire assemblies with alternative wire shapes.

**FIG. 17C** shows a cross-section of a wire of **FIG. 17B.**

## DETAILED DESCRIPTION

Complex electric fields and static electric fields to effect motion with conduction currents is disclosed. In an example, a method of using interacting electric fields from charges between paired conductors or between a conductor and magnetic materials in different inertial reference frames to effect motion is disclosed. A first example demonstrates a method of producing a force from an assembly of two conductors made of different materials that have different drift velocities for their mobile electric charges. The example method implements the mathematical framework that divides the electric fields from the charges in different inertial reference frames into separate electric field equations in electrically isolated conductors. The example method then implements the interaction of these electric fields to produce a force on an assembly to propel a spacecraft using electricity without any propellant.

A second example replaces one set of conductors with a block of magnetic material with the magnetic moments aligned to create interacting electric fields materials in different inertial reference frames to effect motion is also disclosed. The second example method then implements the interaction of these electric fields to produce a force on an assembly to propel a spacecraft using electricity without any propellant. Instead of using today's electromagnetic framework, the following equations can be implemented to effect motion from charges in different inertial reference frames.

For the sake of completeness, a derivation of these equations is provided later. Electric Field Equation:

$$\vec{E} = -\frac{\partial \vec{V}}{\partial t}\frac{\Phi}{c^2} - \nabla \times \frac{\vec{V}}{c}\Phi - \nabla\Phi \ \text{Volts/Meter} \qquad\qquad \text{(EQN 1)}$$

Scalar Electric Potential Equation:

$$S = \frac{\partial}{\partial t}\frac{\Phi}{c} + \vec{V} \cdot \frac{\vec{V}}{c}\Phi \text{ Volts/Second} \qquad \text{(EQN 2)}$$

This mathematical framework splits the electric fields from the electric charges in different inertial frames of references, into separate equations. To determine the forces between paired conductors or a conductor and magnetic materials these two sets of two equations are then coupled together by the medium that the charges reside in to create a force equation.

The magnetic field can be derived from these two sets of equations which mathematically describe the magnetic field when these charges are flowing through the medium of a wire conductor or in magnetic materials. These frameworks can be implemented to effect motion from electric currents in conductors or magnets in ways that can be implemented for spacecraft propulsion with electric currents only.

Before continuing, it is noted that the examples described herein are provided for purposes of illustration, and are not intended to be limiting. Other devices and/or device configurations may be utilized to carry out the operations described herein.

It is further noted that as used herein, the terms "includes" and "including" mean, but is not limited to, "includes" or "including" and "includes at least" or "including at least." The term "based on" means "based on" and "based at least in part on."

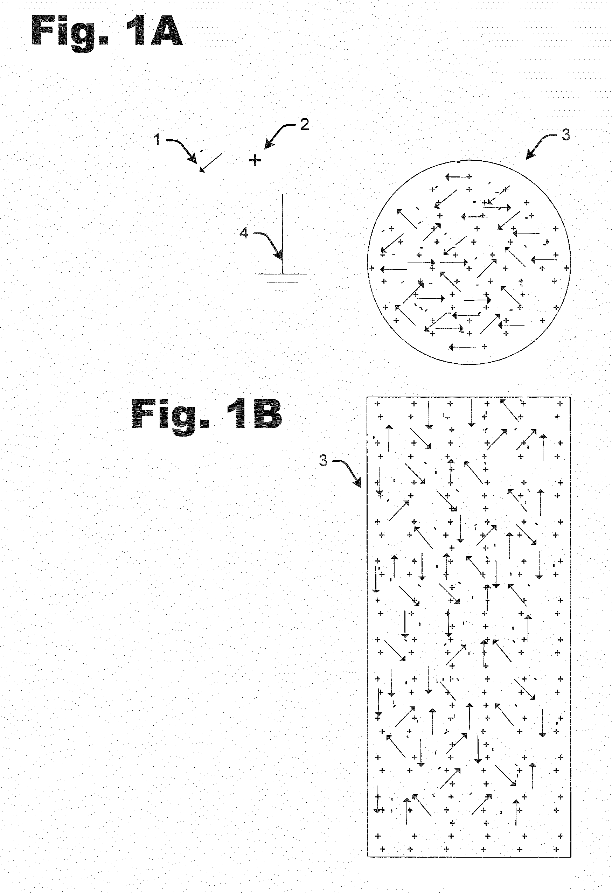

**FIGS. 1A and 1B** illustrate a wire conductor with no electric current, wherein (A) is a wire conductor end view, and (B) is a wire conductor side view. The moving negative electrons **1** and fixed positive charges **2** are illustrated in an uncharged wire conductor **3** with no electric current flowing through it. The wire conductor **3** has fixed atoms that have a static unpaired positive charge **2** from the unpaired proton that the mobile electron **1** leaves behind in copper that makes copper a conductor of an electric current. The unpaired positive charge **2 is** from the unpaired proton that is tightly coupled to the atomic structure of the wire conductor, while the mobile electron 1 is only coupled to the wire **3** by the electric charge of the wire **3** and the physical boundaries of the wire **3**. In the inertial reference frame of the wire the positive charge **2** just has one term from the electric field equation (1) to describe its electric field that is represented by the protons static electric field.

Electric Field Equation for the Fixed Positive Charges **2** can be described as follows:

$$\vec{E}(+) = +\nabla\Phi \text{ Volts/Meter} \qquad \text{(EQN 3)}$$

The mobile electrons **1** in a wire conductor **3** also have a static electric field that is modified by the effects of relativity. The electric field from these mobile electrons **1** is described mathematically by the electric field equation (1) as a static electric field that is modified by a Lorentz contracted term and a term to describe the acceleration of the electrons as they change direction in the wire **3**.

$$\vec{E} = -\frac{\partial \vec{V}}{\partial t}\frac{\Phi}{c^2} - \nabla \times \frac{\vec{V}}{c}\Phi - \nabla\Phi \text{ Volts/Meter} \qquad \text{(EQN 4)}$$

In addition, there is also a scalar electric potential term from equation (2) that is observed as the electrons **1** approach and recede from an observer of the wire. The random movements of the mobile electrons in the stationary wire offset each other and do not modify the static electric field of the wire **3**, except to create noise in the electric field.

$$S(Receding \,-) = +\vec{V} \cdot \frac{\vec{V}}{c}\Phi \text{ Volts/Second} \qquad \text{(EQN 5)}$$

$$S(Approaching \,-) = -\vec{V} \cdot \frac{\vec{V}}{c}\Phi \text{ Volts/Second} \qquad \text{(EQN 6)}$$

The result of the interactions of the electric fields from the stationary positive charges **2** electric fields and the electric fields from the mobile electrons **1** is to give the wire conductor **3** a slightly negative charge when the wire conductor **3** has an equal number of free electrons **1** to the unpaired protons **2** in the atoms. The static electric fields of the negative electrons **1** and the positive charges **2** from the unpaired protons follow the rules of superposition and sum to 0.

$$0 = +\nabla\Phi(\text{protons}) - \nabla\Phi(\text{electrons}) \text{ Volts/meter} \qquad (\text{EQN 7})$$

The resulting electric field that is observed from the wire conductor is from changes to electric field of mobile electrons **1** from the effects of the Lorentz contraction of the negative electric charge **1.**

$$\vec{E}(Wire) = -\nabla \times \frac{\vec{v}}{c}\Phi \text{ Volts/meter} \qquad (\text{EQN 8})$$

Equation (8) shows the increase in the negative electric fields from the motion of the electrons **1** that are observed perpendicular to their motion and as such do not follow all the rules of superposition. The increase in the electric field from the moving electron **1** is from the effects of relativity from the Lorentz contraction that is observed from the moving electrons. This forces the negative charge density of the wire to be greatest near the outside of the wire and the ends of the wire.
The changes to the electric field equation for the free electrons **1** due to the acceleration of the electrons **1** are modeled by the following equation.

$$\vec{E}(Wire) = -\frac{\partial \vec{v}}{\partial t}\frac{\Phi}{c^2} \text{ Volts/meter} \qquad (\text{EQN 9})$$

The electric field from equation (9) is observed from the electrons **1** as they change velocity inside the conductor **3** in a manner that is material and physical shape dependent.
The wire conductor **3** retains a negative charge **1** until the wire **3** comes in contact with the earth ground **4.** Some of the negative charge **1** moves to earth ground **4** and the wire conductor **3** has a slight deficit in negative charge **2,** to give it a neutral charge or no total electric field.

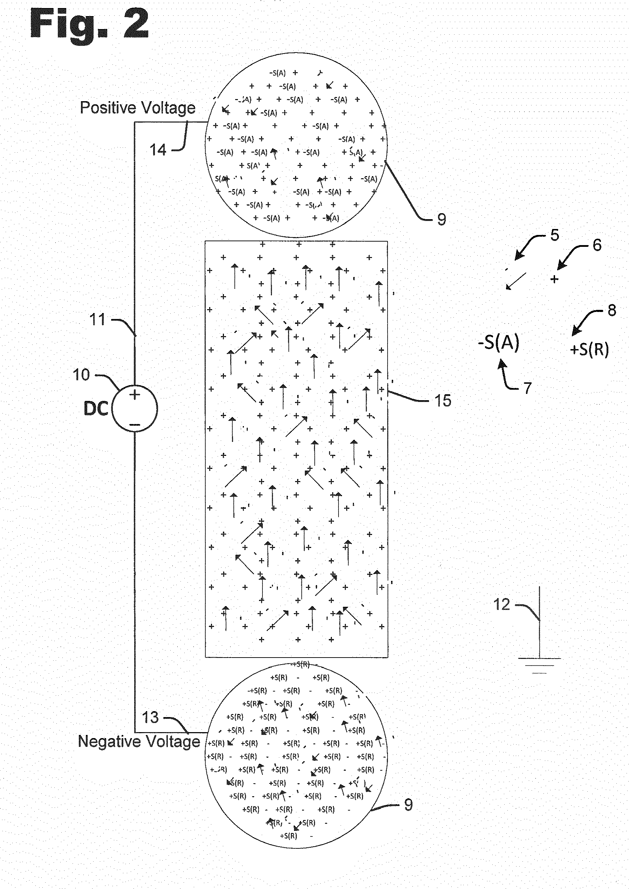

**FIG. 2** illustrates the moving negative electrons **5** when a voltage source **10** is applied to the wire **9, 15** with the negative potential **13** on the bottom end face of the wire **9** and a positive potential **14** is applied to the top end face of the wire **9.**
The side view of the wire **15** observes the electric field from the moving electrons **5** increasing along its width and length from the effects of relativity, as the electrons drift to the positive end of the wire as an electric current. When the positive charge's **6** electric fields and the moving negative charge's **5** electric fields are coupled together inside of a wire conductor **9** the difference in the two charges electric fields are observed as the magnetic force that is described by the magnetic field using todays vector equations that were derived from Maxwell's equations.
The edge of the ends of the wire **9** allow the receding +S(R) **8** and approaching -S(A) **7** scalar potential to be observed as a decrease and increase in the electric field at the ends of the wire that can be measured with a static electric field meter.

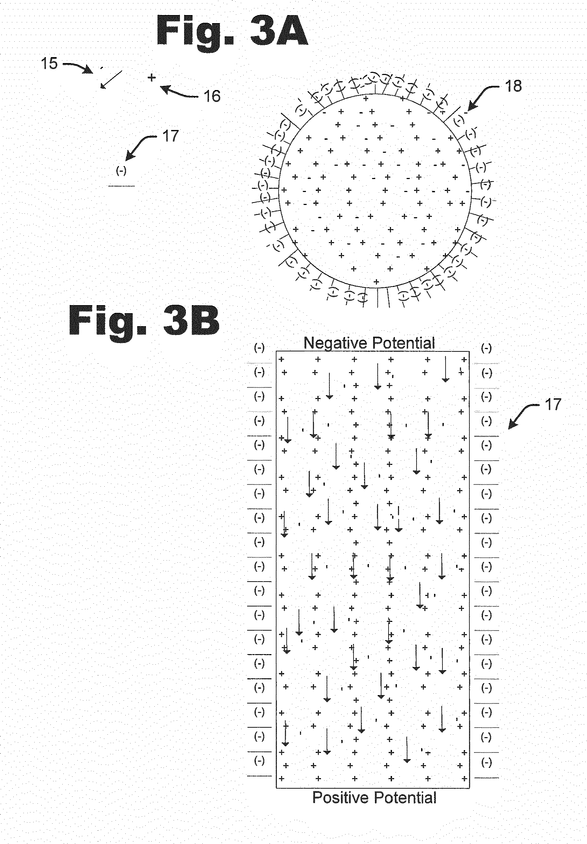

**FIGS. 3A and 3B** illustrate an electric field from a round wire with an electric current, wherein (A) is a wire conductor end view, and (B) is a wire conductor side view. The moving negative electrons **15** electric field change **17** are illustrated from their motion from a round wire **18.** The total electric field is composed of the static electric field **16** from the fixed positive charges represented by equation (10).

$$E(+) = +\nabla\Phi \frac{\text{Volts}}{\text{Meter}} \qquad (\text{EQN 10})$$

The electric fields from the negative electrons that compose the electric current are represented by equation (11).

$$\vec{E}(-) = -\nabla \times \frac{\vec{V}}{c}\Phi - \nabla\Phi \frac{\text{Volts}}{\text{Meter}} \qquad\qquad \text{(EQN 11)}$$

The electric fields from the two different charges follow a subset of the rules of superposition due to the charges being physically coupled together in the stationary wire and sum together as represented by equation (12).

$\perp$ = Viewed perpendicular to the charges motion

$\parallel$ = Viewed parallel to the charges motion

$$\vec{E}(\perp, \parallel) = +\nabla\Phi(\text{Positive}) - \nabla\Phi(\text{Negative}) \frac{\text{Volts}}{\text{Meter}} \qquad\qquad \text{(EQN 12)}$$

The resulting difference electric field **17** is observed outside the wire **18** when the wire is viewed perpendicular to the electric current direction, and is represented by equation (13).

$$\vec{E}(\perp) = -\nabla \times \frac{\vec{V}}{c}\Phi \frac{\text{Volts}}{\text{Meter}}, \qquad \vec{E}(\parallel) = 0 \qquad\qquad \text{(EQN 13)}$$

The resulting electric field **17** that is observed from the wire is the electric field component that produces the magnetic field from a wire. Conversion of the resulting electric field **17** to a magnetic field is illustrated by equations (14), (15), (16), and (17).

$$\Phi = \frac{Charge}{4\pi\varepsilon_0 r^2} Volts, \qquad \vec{A} = \frac{\mu_0 \vec{I}}{4\pi} Amperes, \qquad \mu_0 = 1/(\varepsilon_0 c^2) \qquad\qquad \text{(EQN 14)}$$

The equations (14) define the spherical charge and the electric current **15** from that spherical charge as Amperes. These equations are coupled together by the constants $u_0$ and $\varepsilon_0$ through the speed of light "c".

$$\vec{I} = Charge \frac{Coulombs}{Seconds} \text{ or Amperes} \qquad\qquad \text{(EQN 15)}$$

The equation (15) is the definition of the electric current **15** as a spherical charge flowing through a two-dimensional area of a round conductor.

$$-\nabla \times \frac{\vec{V}}{c}\Phi \frac{\text{Volts}}{\text{Meter}} = -\nabla \times \frac{\vec{V}}{c}\left(\frac{Charge}{4\pi\varepsilon_0 r^2}\right) = \left[\frac{\mu_0 \vec{I}}{4\pi} \frac{1}{\varepsilon_0 c^2}\right] = \vec{A} \qquad\qquad \text{(EQN 16)}$$

Equation (16) converts the difference electric field **17** from the moving charge into the magnetic potential that is created from a spherical charge flowing through a round wire **18** as an electric current **15**.

$$\vec{B} = \nabla \times \vec{A}\, Volt \cdot \frac{Second}{Meter} \text{ or } Tesla \qquad\qquad \text{(EQN 17)}$$

Equation (17) converts the magnetic vector potential to the magnetic field. But the conversion is based on the properties of a copper wire conductor **18** that is just a special case that is not valid if these physical properties or material that the electric current flows through is different.

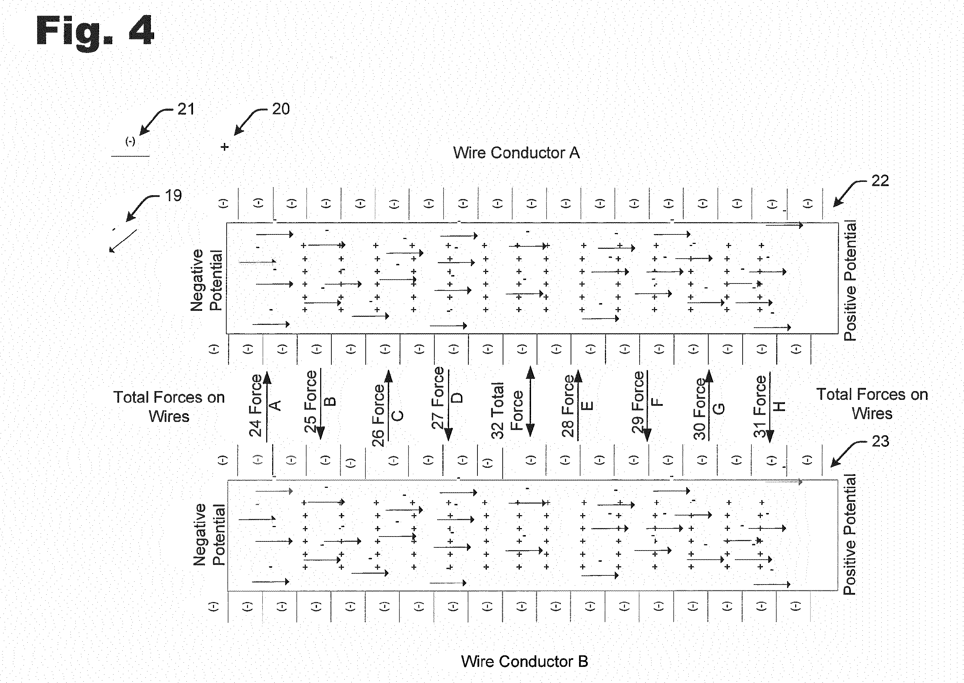

**FIG. 4** illustrates in mathematical schema the relativistic electric field **21** interactions between two wire conductors **22, 23,** each with an electric current **19,** that are in close proximity of each other. The wires are shown in side view arranged lengthwise and approximately parallel. They are fixed in this relation in the assembly body. The moving negative **19** charges interact with the stationary positive charges **20** in the wires to produce a total force **32** between these wires.

When Wire A **22** has an electric current **19** flowing through it that produces a positive electric field from the stationary positive charges **20** and a negative electric field **21** from the moving negative charges **19.** Wire B **23** has the same two types of electric fields. These electric fields are in two physical objects **22, 23** of the same material and shape, so a subset of the rules of superposition mathematically extract a set of magnetic forces that can be modeled in the mathematical framework that describes the magnetic force from a magnetic field.

If the resulting force on the wires **32** is determined from the interactions of these different electric fields, instead of using the framework based on the magnetic field, we have a framework that describe the forces observed from conductors **22, 23.** Determining forces on these wires allow us to take into account the materials and shape of the wires to determine the total forces on the wires.

Total force on wire A **22** can be described by four electric field interactions with wire B **23** that produces four forces on wire A as separate forces **24, 25, 26, 27** that can be represented as:

$$\overrightarrow{F_A} + \overrightarrow{F_B} + \overrightarrow{F_C} + \overrightarrow{F_D} = Total\ force\ on\ wire\ A \qquad (EQN\ 18)$$

Repulsive force on Wire A **22** from the electric field interactions from the positive charges in wire A **22** with the positive charges in wire B **23** can represented as:

$$\overrightarrow{F_A} = \vec{F}\left[\vec{E}_{Wire\,A}(+) <=> \vec{E}_{Wire\,B}(+)\right] \qquad (EQN\ 19)$$

Attractive force on Wire A **22** from the electric field interactions from the positive charges in wire A **22** with the moving negative charges in wire B **23** can represented as:

$$\overrightarrow{F_B} = \vec{F}\left[\vec{E}_{Wire\,A}(+) >=< \vec{E}_{Wire\,B}(-)\right] \qquad (EQN\ 20)$$

Repulsive force on Wire A **22** from the electric field interactions from the moving negative charges in wire A **22** with the moving negative charges in wire B **23** can represented as:

$$\overrightarrow{F_C} = \vec{F}\left[\vec{E}_{Wire\,A}(-) <=> \vec{E}_{Wire\,B}(-)\right] \qquad (EQN\ 21)$$

Attractive force on Wire A **22** from the electric field interactions from the moving negative charges in wire A **22** with the positive charges in wire B **23** can represented as:

$$\overrightarrow{F_D} = \vec{F}\left[\vec{E}_{Wire\,A}(-) >=< \vec{E}_{Wire\,B}(+)\right] \qquad (EQN\ 22)$$

Then the total force on wire B **23** is described by four electric field interactions with wire A **22** that produces 4 separate forces **28, 29, 30, 31** on wire B **23** that can be represented as:

$$\overrightarrow{F_E} + \overrightarrow{F_F} + \overrightarrow{F_G} + \overrightarrow{F_H} = Total\ force\ on\ wire\ B \qquad \text{(EQN 23)}$$

Repulsive force on Wire B **23** from the electric field interactions from the positive charges in wire A **22** with the positive charges in wire B **23** can represented as:

$$\overrightarrow{F_E} = \vec{F}\left[\vec{E}_{Wire\ B}(+) <=> \vec{E}_{Wire\ A}(+)\right] \qquad \text{(EQN 24)}$$

Attractive force on Wire B **23** from the electric field interactions from the positive charges in wire A **22** with the moving negative charges in wire B **23** can represented as:

$$\overrightarrow{F_F} = \vec{F}\left[\vec{E}_{Wire\ B}(+) >=< \vec{E}_{Wire\ A}(-)\right] \qquad \text{(EQN 25)}$$

Repulsive force on Wire B **23** from the electric field interactions from the moving negative charges in wire A **22** with the moving negative charges in wire B **23** can represented as:

$$\overrightarrow{F_G} = \vec{F}\left[\vec{E}_{Wire\ B}(-) <=> \vec{E}_{Wire\ A}(-)\right] \qquad \text{(EQN 26)}$$

Attractive force on Wire B **23** from the electric field interactions from the moving negative charges in wire A **22** with the positive charges in wire B **23** can represented as:

$$\overrightarrow{F_H} = \vec{F}\left[\vec{E}_{Wire\ B}(-) >=< \vec{E}_{Wire\ A}(+)\right] \qquad \text{(EQN 27)}$$

Determining the forces on these wires as 8 separate force vectors allows these same forces to be modeled mathematically as a special case of a mathematical framework, with the simpler mathematical framework of a magnetic field with a magnetic force if the wires **22, 23** are made of the same shape and made of the same material. If the wires **22, 23** are of different shapes or made of different materials, the force on Wire A is different than the force on Wire B.

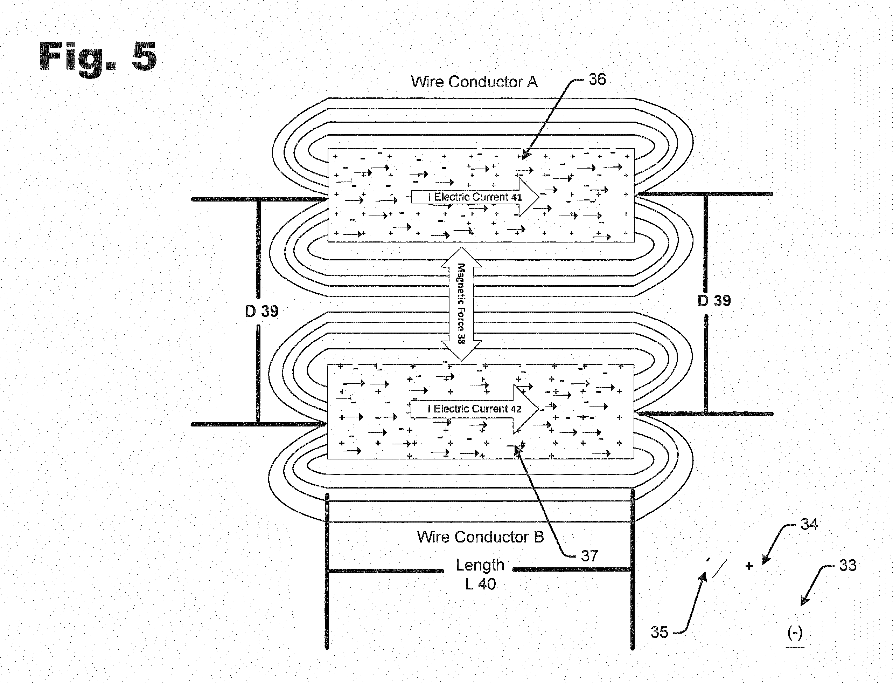

**FIG. 5** illustrates mathematically the forces on two wires **36, 37** of the same shape and made of the same materials using the mathematical framework that physics has created to model magnetic forces from wire conductors **36, 37**. The magnetic forces **38** that are described by these equations are based on $4\pi$ and the permeability constant in electromagnetics.

The total force on wire A **36** is determined by the equations:

$$\vec{F}_{Wire\ A} = \frac{\mu_o \vec{I}_A \vec{I}_B}{2\pi}\frac{2}{D} L_A\ \text{Newtons}, \qquad \vec{I}_A\ \mathbf{41},\ \vec{I}_B\ \mathbf{42} \qquad \text{(EQN 28)}$$

$L_x$ = Lenght of Wire **40** D = Distance between Wires **39** (EQN 29)

The total force on wire B **37** is determined by the equation:

$$\vec{F}_{Wire\ B} = \frac{\mu_o \vec{I}_A \vec{I}_B}{2\pi}\frac{2}{D} L_B\ \text{Newtons} \qquad \text{(EQN 30)}$$

The total force between each of the wires **36, 37** is then:

$$38 \; \vec{F}_{Total} = \vec{F}_{Wire\,A} + \vec{F}_{Wire\,B} \qquad\qquad\qquad \text{(EQN 31)}$$

The total force on the wires is then:

$$38 \; \vec{F}_{Total} = \frac{\mu_0 \vec{I}_A \vec{I}_B}{2\pi D} \, L \; \text{Newtons} \qquad\qquad\qquad \text{(EQN 32)}$$

These forces **38** can be represented as interactions of electric fields from charges in different inertial reference frames that do not follow the rules of superposition.

The force on wire A **36** is:

$$\vec{F}_{Wire\,A} = -\nabla \times \frac{\vec{V_A}}{c}\left[\frac{\mu_0 \vec{I}_B}{4\pi}\frac{1}{\varepsilon_0 c^2}\right]\frac{2}{D}L_A = -\nabla \times \frac{\vec{V_A}}{c}\frac{Q_B}{4\pi\varepsilon_0 r}\frac{2\vec{I}_B}{D}L_A \qquad \text{(EQN 33)}$$

$$\vec{F}_{Wire\,A} = -\nabla \times \frac{\vec{V_A}}{c}\Phi_A\frac{2\vec{I}_B}{D}L_A \qquad\qquad\qquad \text{(EQN 34)}$$

The force on wire B **37** is:

$$\vec{F}_{Wire\,B} = -\nabla \times \frac{\vec{V_B}}{c}\left[\frac{\mu_0 \vec{I}_A}{4\pi}\frac{1}{\varepsilon_0 c^2}\right]\frac{2}{D}L_B = -\nabla \times \frac{\vec{V_B}}{c}\frac{Q_A}{4\pi\varepsilon_0 r}\frac{2\vec{I}_A}{D}L_B \qquad \text{(EQN 35)}$$

$$\vec{F}_{Wire\,B} = -\nabla \times \frac{\vec{V_B}}{c}\Phi_B\frac{2\vec{I}_A}{D}L_B \qquad\qquad\qquad \text{(EQN 36)}$$

For the forces from these equations to determine the forces observed from wire conductors **36, 37,** the velocity of the charges is fixed at velocities in the range of 1 cm/sec that is for copper conductors.

The constants μ (Permeability) and $4\pi$ are derived from the shape of wire conductors **36, 37** and the characteristics of the copper conductor, similar to the drift velocity of 1 cm/sec that defines a constant. If wires materials are changed to a different material (e.g., Graphene, Nichrome, or a Superconductor), with different drift velocities for the negative charges, these materials may need a correction factor to determine the forces on these wires **36, 37** made of these different materials to determine the forces observed on these wires.

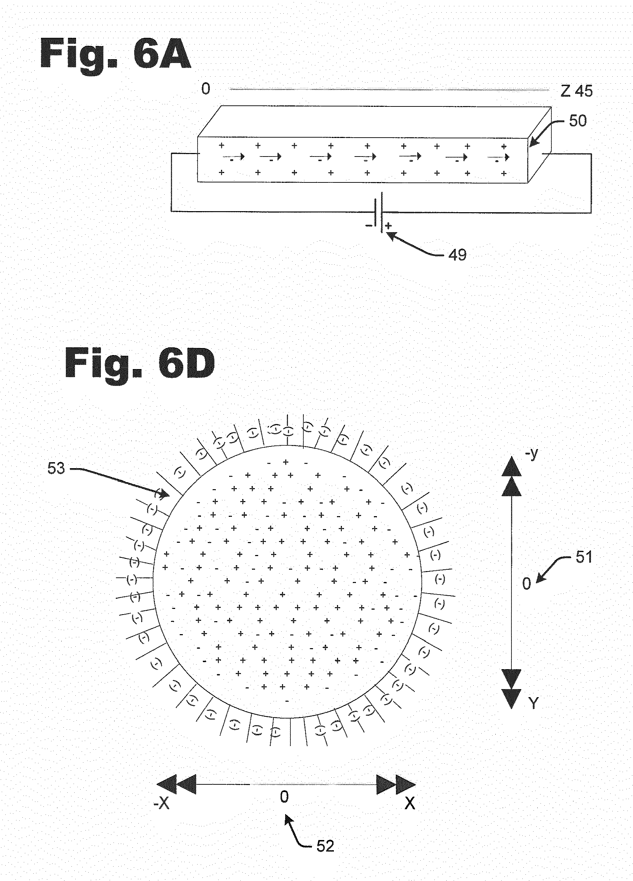

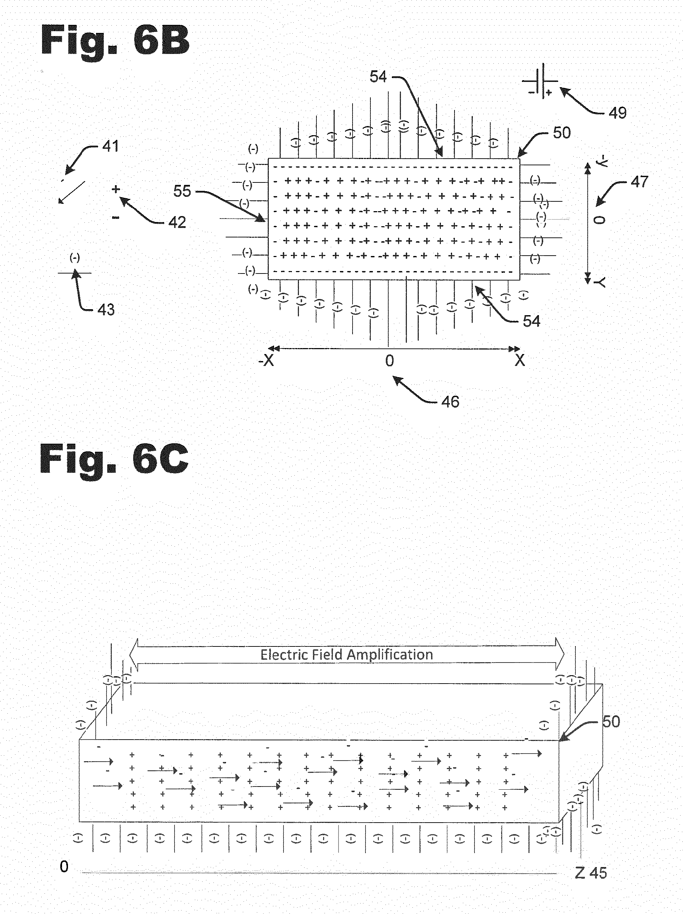

The shape is not represented in the mathematical framework based on the magnetic field that describe magnetic forces. The mathematical framework based on the magnetic field does not differentiate the forces observed from a cylindrical wire or a flat wire with the same amount of current for the same wire cross sectional area. **FIGS. 6A, 6B, 6C and 6D** illustrate square conductors having an electric field with a current, wherein (A) is a square conductive wire with an electric current with flat faces, (B) is a square wire end view, (C) is a square wire side view, and (D) is a round wire end view. The figures illustrate graphically the relativistic changes in the electric field of a graphene conductive square wire **50** with flat faces that has an electric current. The negative electric current **41** is in a different inertial frame of reference than the positive charges **42** in the wire that results in a difference relativistic electric field **43** that has been represented by the mathematical framework as the magnetic field.

The mathematics that model the forces from a round wire **53** using the magnetic field predict that the square wire **50** with an electric current **41** experience the same magnetic force on the round wire **53** with the same electric current observed with the square wire **50**.

Instead of representing the forces between a square wire **50** and a round wire **53** by using the magnetic field, the forces are determined as the interaction of two electric fields **43** from two different charges **42, 41** in two different inertial frames of reference in the two different physical objects **50, 53** interacting to produce the two forces on the objects.

We now have the difference relativistic electric fields **43** from the wires that do not follow all the rules of superposition that is the basis for the magnetic force. This allows the two wires to observe different electric fields that are different from a square wire **50** and round wire **53** that results in different forces observed by the round wire **53** as compared to the square wire **50**.

The negative electric current that is flowing along the length **45** of the wire **50** from left to right along the Z axis **45**. The moving negative charges **41** distribute themselves evenly on the flat faces **54, 55** of the wire **50** as represented as the X axis and Y axis **46, 47**. The negative charges **41** distribute themselves evenly to keep the electric field in the wire at 0 in the moving reference frame of the negative charges **41**.

The negative electric charges **41** are physically coupled to the stationary reference frame of the wire **50**. Yet the electric field **43** of the negative moving charges **41** increase in intensity when observed perpendicular to their motion from the stationary reference frame due to the effects of relativity known as the Lorentz contraction of the charges.

The increase in the electric field **43** observed from the stationary reference frame of the wire from the motion of the negative electric charges **41**, is geometrically amplified (e.g., similar to a uniform line charge amplified across its length). The equation for the electric field of a line charge is mathematically described below:

L = Length of Uniformly Charged Wire in Meters

x =Position from center of Wire from $-\frac{L}{2}$ $to\ 0\ to$ $\frac{L}{2}$ Meters 2 2

D = Distance Perpendicular from Wire in Meters

y = $\Lambda_q$ = Charge Density in Coulombs/Meter

$$E(x) = \frac{y}{2\pi\epsilon_o D}\left(\frac{L}{\sqrt{\left(D^2+\left(\frac{L}{2}\right)^2\right)}} - \frac{2x}{\sqrt{(D^2+x^2)}}\right) Volts/Meter \qquad \text{(EQN 37)}$$

The faces of the square wire **54, 55** experience geometric amplification of the electric field intensity increase **43** from the charges motion along the Z axis **45** that is perpendicular to the direction of the electric current on the X and Y **46, 47** axis's that is modeled as a line charge of a uniformly charged wire.

The integration of the line charge to get the electric field **43** produce an electric field that is greatest at the center of the faces of the flat wire **54, 55** that is perpendicular to the electric current direction.

$w_x, w_y$ = Width of Wire Faces **54, 55** in Meters

x,y =Position from center of Faces **46, 47** in Meters

D = Perpendicular Distance from face in Meters

$\Lambda_{iq}$ = Charge Density increase in Coulombs/Meter

$$\Lambda_{iq} = -\vec{\nabla} \times \frac{\vec{V_z}}{c}\Lambda_q\ Volts/Meter \qquad \text{(EQN 38)}$$

$$E(x) = \frac{\Lambda_{iq}}{2\pi\epsilon_o D}\left(\frac{w_x}{\sqrt{\left(D^2+\frac{w_x^2}{2}\right)}} - \frac{2x}{\sqrt{(D^2+x^2)}}\right)\frac{Volts}{Meter} \qquad \text{(EQN 39)}$$

$$E(y) = \frac{\Lambda_{iq}}{2\pi\epsilon_o D}\left(\frac{w_y}{\sqrt{\left(D^2+\frac{w_y^2}{2}\right)}} - \frac{2y}{\sqrt{(D^2+y^2)}}\right)\frac{Volts}{Meter} \qquad \text{(EQN 40)}$$

The round wire **53** does not experience this amplification of the electric field **43** around the circumference of the wire. Instead, the increase of the electric field due to the charges motion are only described by the equation:

$$E(x) = \frac{-\nabla\times\frac{\overline{V}_z}{c}\Lambda_q}{2\pi\epsilon_o D}\frac{Volts}{Meter} \qquad \text{(EQN 41)}$$

These differences in the electric fields from these different relativistic electric fields for a round wire **53** and a square wire **50** can create a difference force that can be implemented to propel a spacecraft in space as one application.

The requirements to produce different forces the two different wires are that the wires have to have different shapes and/or made of different materials with different drift velocities and/or charge distributions and powered by two separate electrically isolated power sources.

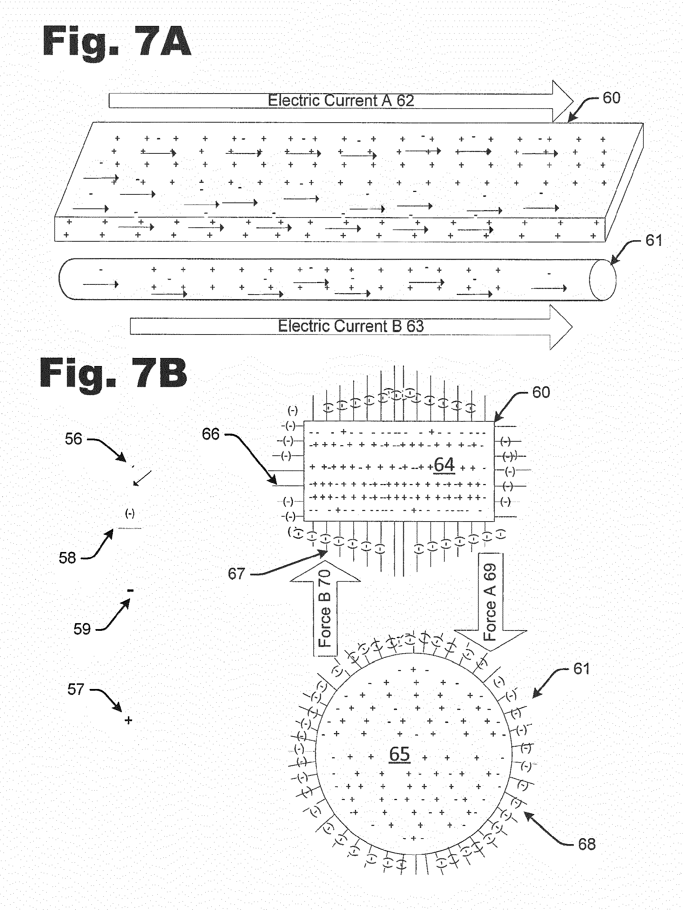

The moving electric charges that are the electric current are in different inertial reference frames. The reason is the electric fields from charges in the same inertial reference frame follow the rules of superposition. Electric fields from charges in different inertial reference frames do not follow the rules of superposition. The difference is the basis for the magnetic field from conductors flowing electric currents. **FIGS. 7A and 7B** illustrate interacting electric fields from two conductors, wherein (A) is a wire conductor's side view, and (B) is a wire conductor's end view. In FIG. 7A, a square conductive graphene wire with flat faces and a tubular copper wire are shown flowing an electric current. In FIG. 7B, Force A **69** is unequal to Force B **70**.

The figures illustrate two parallel wires **60, 61** with an electric current **62** in a square wire **60** that is parallel to a round copper wire **61** with an electric current **63**. The end view of the wires **64, 65** shows the electric fields from charges **56, 57** moving at different drift velocities or in different inertial reference frames. If the wires **64, 65** had the same drift velocities the difference electric fields for the charges in the same inertial reference frame obey the rules of superposition and merge into one electric field. Since the charges drift velocity is different for graphene and copper the difference electric fields **66, 67, 68** from the wires **60, 61** do not follow the rules of superposition. Instead the rules of superposition are only valid for the electric fields from charges in the same inertial reference. This results in the positive charges **57** in the two wires **60, 61** observing two different total electric fields **66, 67, 68** from the other wire. This causes the forces **69, 70** that the two wires to observe from each other to be different.

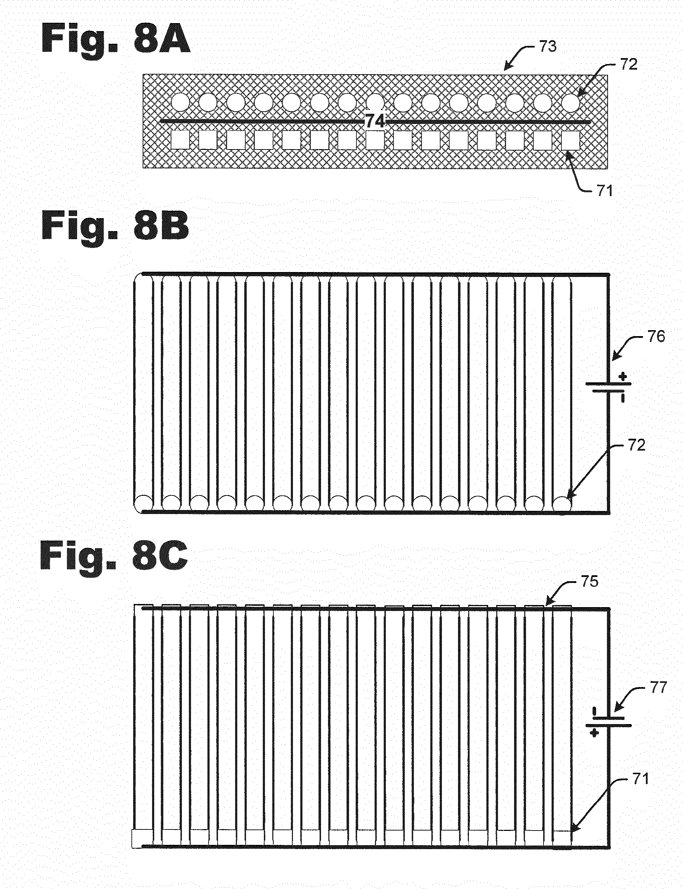

**FIGS. 8A, 8B and 8C** illustrate a cutaway view of an example assembly of two planes of wire conductors with power supplies and wiring diagram, wherein (A) is an edge view of the wires in a non-conductive frame, (B) is a top view of round wires in a non-conductive frame, and (C) is a top view of square wires in a non-conductive frame. The figures illustrate graphically an edge view of a sheet of square of round copper wires **72** and square wires **71** with flat faces made of two different materials in a nonconductive frame **73**. The round copper wires **72** and square graphene wires **71** are electrically isolated from each other by a non-conducting sheet **74** as an example of a sheet of Kapton.

The wires are powered by electrically isolated power supplies **76, 77**. The physical diagram and schematic of the top sheet of the wires **78** diagrams the wires being powered in parallel by power supply **76**. The schematic of the bottom sheet of the wires **75** diagrams the wires being powered in parallel by power supply **77** with the electric current flowing in the opposite direction as the top sheet.

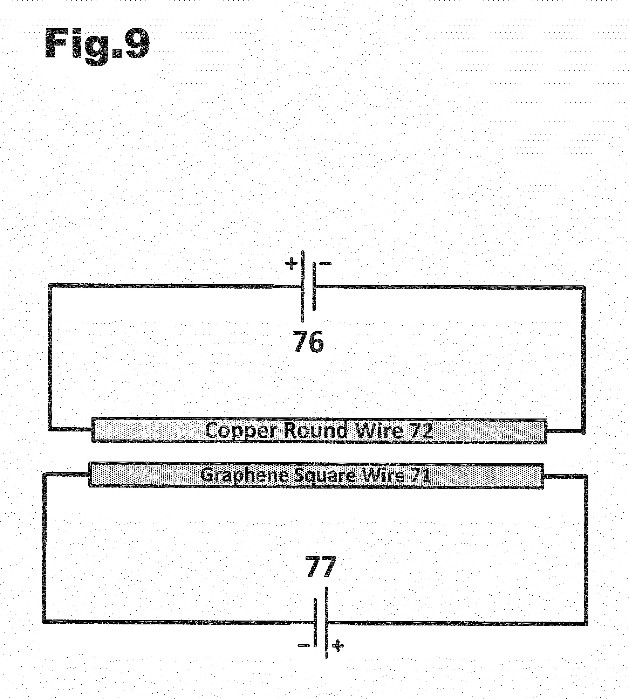

**FIG. 9** illustrates the electrical schematic of the electrical circuit that powers the two sheets of conductors **72, 71**. The copper wires **72** and graphene wires **71** are powered by separate electrically isolated power supplies **76, 77**.

The electric currents from the battery **76** that supplies electric current to the round copper wires **72** is physically in the opposite direction from the electric current from battery **77** that supplies the electric current to the graphene wires **71.** The electric currents from the battery **76** that supplies electric current to the round copper wires **72** can also be in the same direction as the electric current from battery **77** that supplies the electric current to the graphene wires **71** to create different opposite forces on the wires **72** and **71.**

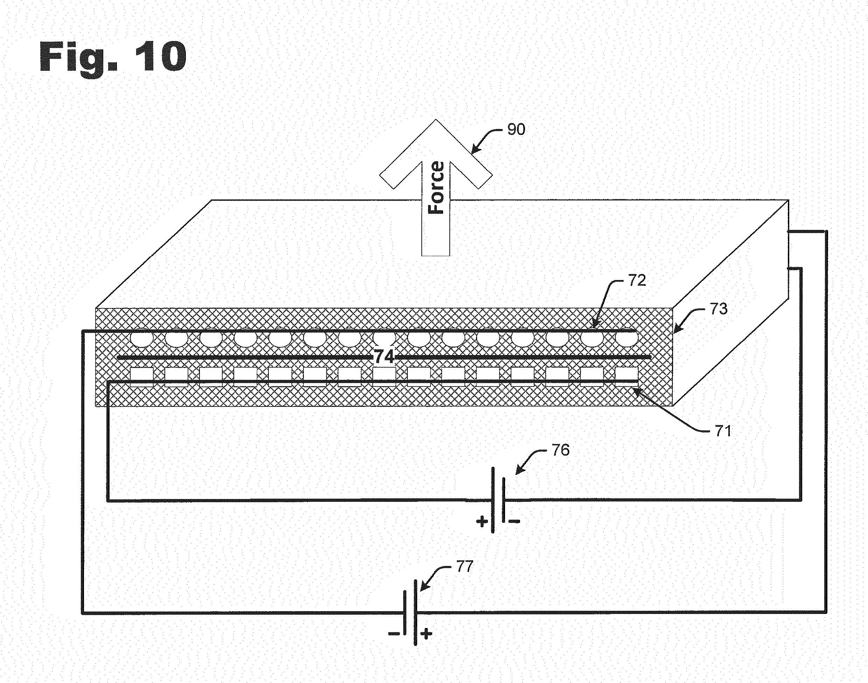

**FIG. 10** illustrates an assembly **73** with an electric current in two different directions from two isolated batteries **76, 77** through two different wire conductors **71, 72.** The two planes of conductors have different electric fields from the motions of the electrons in wires that do not follow the rules of superposition such that the wires observe different electric fields from the other sheet of wires.

These two different electric fields result in different forces to be observed from the two sheets of wires **71, 72.** This then results on a force **90** on the assembly that only requires the assembly to be powered by two isolated by independent power supplies. The power supplies that power the conductors have to be physically and electrically isolated from each other. The conductors must have no external connections to ground or any conductor that connects to an external object outside the assembly. The conductors cannot connect to ground or together after they are powered through another conductor.

The round tubular wire **72** can be replaced with other types of wire shapes that do not geometrically amplify or geometrically amplify on different surfaces the electric changes electric fields due to relative motion of the charge carriers like conductive spheres or half spheres, conductive ovals, conductive u shaped wires or thin flat wires that are perpendicular to the flat faces of the square wires. The square wires can be replaced with thin flat wires that have their flat faces near the round or tubular wires. The round tubular wire **72** may, alternatively, be replaced with a conductive non-smooth surface, a curved surface, or a rippled surface. The surface may be covered with conductive plates or spheres which are of the milli, micro, or nano scale. These plates or spheres could also be embedded within the conductor. The conductor may be made from one conductive material, or it could be made from a composite matrix comprising both conductive and non-conductive elements which, when taken as a whole, are conductive.

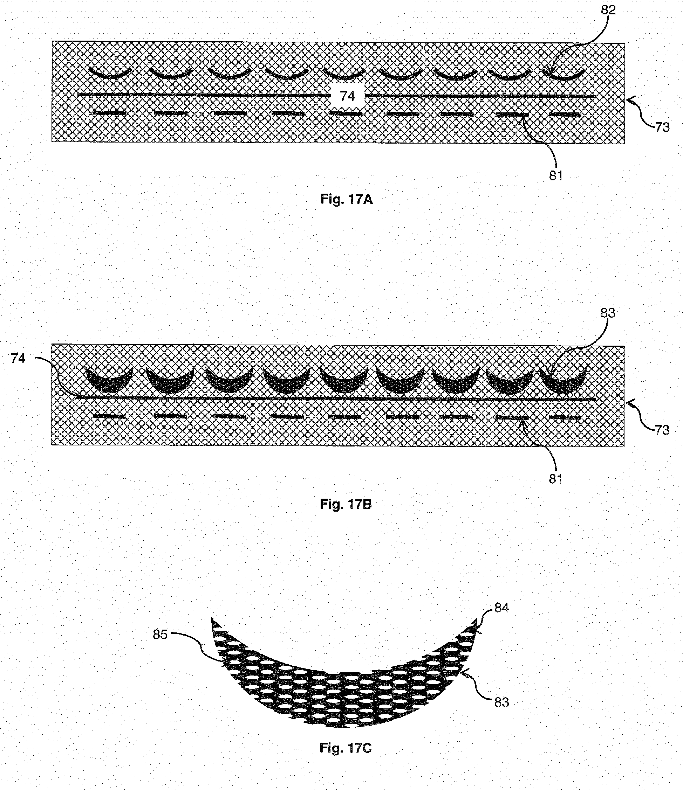

**FIGS. 17A** and **17B** show examples of the assembly **73** with alternative wire shapes. **FIG. 17A** illustrates an embodiment where the round tubular wires **72** have been replaced with ribbon wires with a curved cross-section **82,** where the width of the wire greatly exceeds its thickness. The square wires **71** have been replaced by thin flat wires **81,** such that their flat faces are near the curved ribbon wires **82. FIG. 17B** illustrates a second alternative embodiment. In this case, the round tubular wires **72** have been replaced with curved conductors **83,** here made of a composite matrix. The square wires **71** have, again, been replaced by thin flat wires **81.** In both embodiments, the convex surface of the conductors is the surface closer to the second conductors, here the thin flat wires.

The cross-section of one of the curved conductors **83** is shown in more detail in **FIG. 17C.** The shape is formed by intersecting two arcs with different radii, where the centers of the arcs are not aligned. The arc angles of the two arcs are different, and are such that the intersection of the two arcs occurs. The arcs are both facing in the same direction. This results in a crescent shaped conductor. The conductor is solid, made of a composite matrix comprising conductive epoxy **84** and non-conductive silver particles **85.** The matrix acts as a conductor when taken together. Alternatively, this shape of conductor could be made of a single conductive material, such as copper. This type of element allows the changes to electric fields from the scalar electric potentials to be observed as a non-linear impedance change of the curved conductor that tracks the external force that the assembly observes.

It should be noted that the space between the conductors in any configuration should be minimized in order to maximize the relativistic forces experienced, while still maintaining sufficient spacing to ensure the conductors are not electrically connected and no charge leaks from one type of conductor to the other.

The resulting force **90** can be implemented to propel spacecraft using electricity only. The same force can also be implemented for any propulsion by a force to move an object with electricity in a vacuum or in any medium.

It is noted that the examples shown and described are provided for purposes of illustration and are not intended to be limiting. Still other examples are also contemplated.

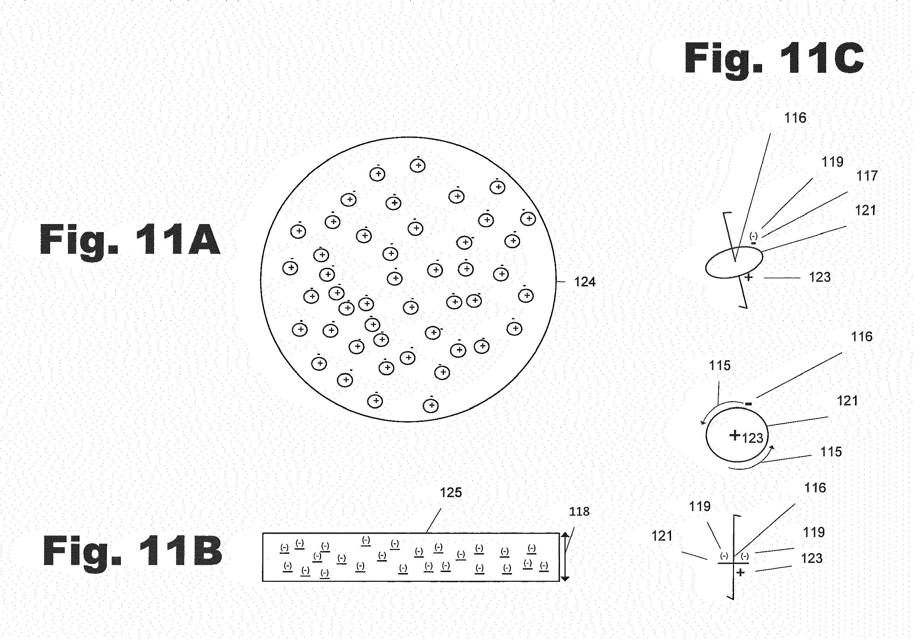

In the following, arrangements with a conductor and a magnet are described. **FIGS. 11A, 11B and 11C** illustrate a magnetic material shaped as a cylinder **124, 125** with no electric current, wherein (A) is the end view, (B) is a side view of the magnetic material and (C) is a representation of the magnetic moment **116** of an atom **116, 117, 119, 121, 123** from an angled view, top view, and side view of the unpaired electron **117** and its electron current **115** and **121** that makes up the magnetic moment **116** from the negative electrons **117** in the outer shell of the atom and its associated positive charge **123** in the atom. The diagram assumes that the material has been magnetized to allow some of the molecules magnetic moments **116** to be aligned in line with the long axis of the cylinder **118.**

The magnetic moments **116** of the molecules can be generated from the electron current **115** of the unpaired electron spins from the negative electrons **117** in the outer shell of the atom that can form a loop of electric current **115.** The paired electrons in an atom have their spins in opposite directions that are represented as an up and down spin that allow the electric field changes to offset each other in their electron shell and do not contribute to the magnetic moment **116** of the atom. The physically fixed positive charge **123** that are paired or coupled to outer unpaired electron

117 are illustrated in an uncharged magnetized cylinder **124** and **125** with no electric current flowing through it.

The physically coupled positive charges **123** of the atom that are paired with the magnetic moment electrons **121** have a static electric field that can be modeled by the following equation when viewed from the inertial frame of reference of the magnet.

$$E(+) = +\nabla\Phi \frac{\text{Volts}}{\text{Meter}} \qquad \text{(EQN 42)}$$

The unpaired electron spins of the negative electrons **117** can be simply modeled as a loop of electric current **121** with a velocity **115** of 20,000 M/S. Each of the individual loops of current **121** from the motion of the negative electrons **117** have an electric field **119** modified by the effects of relativity from the Lorentz contraction of the electric charge that can be modeled by the following equation when viewed from the inertial frame of reference of the magnet.

$$\vec{E} = -\nabla \times \frac{\vec{V}}{c}\Phi - \nabla\Phi \frac{\text{Volts}}{\text{Meter}} \qquad \text{(EQN 43)}$$

Equation (43) increases the negative electric field **119** from the motion of the electrons **115** that are observed perpendicular to their motion and as such do not follow all the rules of superposition for all views. When the loop of electric current **121** is viewed perpendicular to the faces of the loops of current **121** of the magnetic moments of the atoms with aligned magnetic moments in the magnet, the total electric fields **119** from the electrons unpaired electron spins and their associated positive charges **123** will have total electric field **119** that is described by the following equation.

$$\vec{E} = -\nabla \times \frac{\vec{V}}{c}\Phi - \nabla\Phi + \nabla\Phi = -\nabla \times \frac{\vec{V}}{c}\Phi \quad \frac{\text{Volts}}{\text{Meter}} \qquad \text{(EQN 44)}$$

The increase of the electric field from the negative electric field **119** from the motion **115** of the electrons **116** is 10,000s of times greater than from a similar electric current in a copper wire. The total difference electric field **119** from the electrons **117** and the positive charges **123** that is observed from the faces of the magnet is going to be different than the magnetic field from an electric field from a wire conductor.

The total difference electric field **119** from the electrons **117** and the positive charges **123** that is observed from the edge of loops of current **121** of the magnetic moments of the atoms now is modeled differently than that is observed from the faces loops of current **121**. The relative motion of the electrons **117** are in opposite directions **115** when viewed from the edge of the loop of current **121** so do not follow the same limited set of rules of superposition that the faces can follow and can sum to 0 when modeling magnetic forces that the magnetic field was created to describe.

The difference electric field **119** will be described from the 3-dimensional integral of total difference electric field from the shape of the magnet **124** and **125**. The face of the magnet **124** and **125** is going to have a 2-dimensional surface integral that is the same as the surface integral that would be done for a uniformly charged flat disk. Since the disk are circular and that the electric field increase is only perpendicular to their motion this creates a symmetry that allows us to use a simpler line integral.

$$\vec{E} = \text{kx}\pi\varepsilon_0 \left[\frac{\vec{V}}{c} \times \Phi\right] \int_0^R \frac{2ada}{(x^2+a^2)^{3/2}} = \text{kx}\pi \left[\frac{\vec{V}}{c} \times \Phi\right] \left[\frac{1}{2(x^2+a^2)^{\frac{1}{2}}}\right]_0^R \frac{\text{Volts}}{\text{Meter}} \qquad \text{(EQN 45)}$$

$$\vec{E} = 2\pi\varepsilon_0 \left[\frac{\vec{V}}{c} \times \Phi\right] \left(1 - \frac{x}{(x^2+R^2)^{1/2}}\right) \frac{\text{Volts}}{\text{Meter}} \qquad \text{(EQN 46)}$$

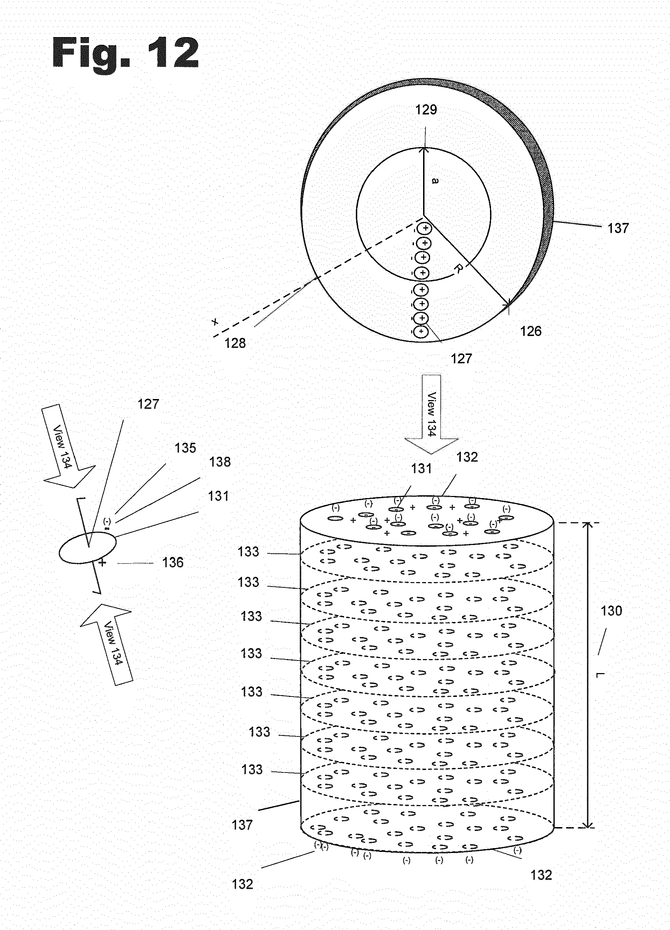

**FIG. 12** represents the terms or variables used in this line integral. **126** is the radius "R" of the cylindrical magnet

137. 128 is the electric field "x" intensity above the face of the face of the cylindrical magnet 137. The term of integration is 129 "a" that represent the positions of the magnetic moment electrons 127 from the center of the cylindrical magnet 137 to the outer edge of the cylindrical magnet 137. The length of the cylindrical magnet 137 represented by "L" 130. The cylinder can be divided into almost infinite number circular sheets 133 of molecules 131 with the same magnetic moments 127. This allows the changes to the electric fields 135 from the aligned magnetic moments 127 to sum or amplify the changes when the magnet is viewed 134 from the ends 132 of the cylinder 137 including when viewed 134 perpendicular to the magnetic moment 127 or above and below 134 the plane 131 of the unpaired electron 138 that makes up the magnetic moment 127.

$$\vec{E} = 2\pi kL \left[ \frac{\vec{V}}{c} \times \Phi \right] \left( 1 - \frac{x}{(x^2 + R^2)^{1/2}} \right) \frac{\text{Volts}}{\text{Meter}} \qquad \text{(EQN 47)}$$

The electric field differences 135 from the aligned magnetic moments 127 that are different when viewed from different directions is today modeled mathematically as the magnetic field. These electric field differences 135 coevolved with the stationary positive charges 136 electric field that has the positive charge physically coupled to the magnet and the moving negative electric charges 138 that form the aligned magnetic moments 127 can be described by the mathematical description modeled mathematically as the magnetic field. When these electric field differences 135 are described by the mathematical description modeled mathematically as the magnetic field, this model is describing just a subset of the possible electric field differences 135 that are predicted by the new mathematical framework presented in this patent in equations (1) and (2).

If another similar magnetized magnetic cylinder 137 is brought near this magnetized cylinder 137 the coevolved electric fields 135 from the different charges 138 and 136 in different inertial reference frames will create a force that can try to minimize the electric field differences of the different charges caused by relativity. Today this force is mathematically represented as an independent field known as the magnetic field.

This results in forces observed on the 2 cylinders 137 that are always in the direction that aligns the magnetic moments of the 2 cylinders. This force can be in a direction that allows the relative average velocities of the electrons that are components of the magnetic moments 131 of the 2 cylinders to be minimized or to align in parallel with each other the plane of electron current 131 of the unpaired electron that makes up the magnetic moment 127.

The physically correct Ampere model is based on the magnetic dipole moments 127 that are due to infinitesimally small loops of current 131 from the unpaired elections 138 in a volume of magnetic material 137. For a sufficiently small loop of current 131, $I$, and area, $A$, the magnetic dipole moment 127 is:

$$m = IA \; amperes \cdot meter^2 \qquad \text{(EQN 48)}$$

$$I = \frac{Coulombs}{Second} \, or \, amperes, \quad A = meter^2 \qquad \text{(EQN 49)}$$

The magnetic field for a uniformly magnetized cylinder 137 can be calculated from the area of the surface of the ends of the cylinder 132 multiplied by the length 130 of the cylinder 137 to calculate the cylinder's volume by the following equation.

$$B_z = \frac{\mu_0 m}{Volume} \, Volt \cdot \frac{Second}{meter^2} \, or \, Tesla \qquad \text{(EQN 50)}$$

The Ampere model that calculates the forces observed from a cylinder of magnetic material 137 from the cylinder's magnetic field is now missing a number of elements that can produce different forces from the same magnetic field. This makes Ampère model just a special case of a broader mathematical framework that has been presented in equations (1) and (2).

This first element that is missing from the Ampere model is an incomplete representation of the electric current in the infinitesimally small loops of current **131** from the unpaired elections **138**. The relative velocity difference of the circulating unpaired electrons **138** to the stationary positive charges **136** is the basis for the forces observed from the interactions of these charges with other materials.

This incomplete representation of the magnetic moment **127** is based instead on the units of $\frac{Coulombs}{Seconds}$ used in the magnetic moment **127** that can be represented by smaller amount of charge flowing thru a fixed area at a higher relative velocity or as a larger amount of charge flowing thru the same fixed area at a lower velocity. This velocity differences create different changes to the electrons electric field **135** that is not represented in the mathematical framework that the magnetic field is describing. This mathematical framework that based on the magnetic field ends up being just a special case that is defined by the characteristics of the material that the cylinder **137** is made of. Equation (50) can be converted to equations (51) (52) and (53) that represent the forces from the cylinder **137** using the difference of the relative velocity of the charges **136** and **138** used in equation (47). The relative velocity difference of the unpaired electrons that generate the magnetic moment can be approximately 20,000 M/S.

$$B_z = \nabla \times \vec{A} \; Volt \cdot \frac{Second}{meter^2} \; or \; Tesla \qquad \text{(EQN 51)}$$

$$\vec{A} = \left[\frac{\mu_0 \vec{I}}{4\pi} \frac{1}{\varepsilon_0 c^2}\right] = \frac{\vec{V}}{c}\left(\frac{Charge}{4\pi\varepsilon_0 r^2}\right) = \frac{\vec{V}}{c}\Phi \frac{Volts}{Meter} \qquad \text{(EQN 52)}$$

$$B_z = \frac{\mu_0 m}{Volume} = -\nabla \times \frac{\vec{V}}{c}\Phi \; Tesla \qquad \text{(EQN 53)}$$

Equation (53) can now be reformulated to relate the magnetic moment **137** to the electric field **135** changes of the unpaired electron **138** that creates the magnetic moment **127** from the effects of relativity.

$$m = -\nabla \times \frac{\vec{V}}{c}\Phi \frac{Volume}{\mu_0} = -\nabla \times \frac{\vec{V}}{c}\Phi \cdot \varepsilon_0 c^2 \cdot Volume \qquad \text{(EQN 54)}$$

Equation (54) for the magnetic dipole moment **127** in this form now includes the velocity and allows for the changes to the electric field **135** from the effects of relativity that give rise to the unpaired magnetic moments **127** to amplify as an electric field can be amplified over a flat surface. This equation also describes the magnetic field as a special case of equations (1) and (2).

This new mathematical framework based on equations (1) and (2) now segregates the electric fields from charges **136** and **138** having different relative velocities that do not follow all the rules of superposition that static electric fields can follow. These same sets of exceptions to the rules of superposition are the same set of exceptions that cause the magnetic field to be modeled as a separate field from a magnet when all the charges **136** and **138** in the magnet are in inertial reference frames that are coupled together by the physical structure of the magnet.

The relativistic electric field **135** from a magnetic cylinder **137** is created from the charges **136** and **138** that have different velocities from the unpaired electrons **138** that create the magnetic dipole moment **127** as compared to the drift velocity an electric current in a coper wire. These relativistic electric fields **135** from a magnetic cylinder **137** that are different inertial reference frames that are coupled to the stationary materials that the charges reside that allow these electric fields to follow a subset of the rules of superposition. This new mathematical framework allows for a magnetic cylinder **137** to observe a different difference electric field from a wire with an electric current that is different as compared to the difference electric field a wire with an electric current observes from a magnetic cylinder **137**.

The differences in the relativistic electric fields **135** from a magnet **137** or a wire with an electric current can only observed if the magnet **137** is electrically isolated from the electric current in a wire that is brought near to it. That also includes that the wire or magnet **137** is electrically isolated from earth ground or any other conductive object that is near to either the wire or magnet **137**. This also includes not electrically connecting either wire or magnet **137** object to ground after wire has an electric current flowing thru it before the wire and magnet **137** are brought close to each other.

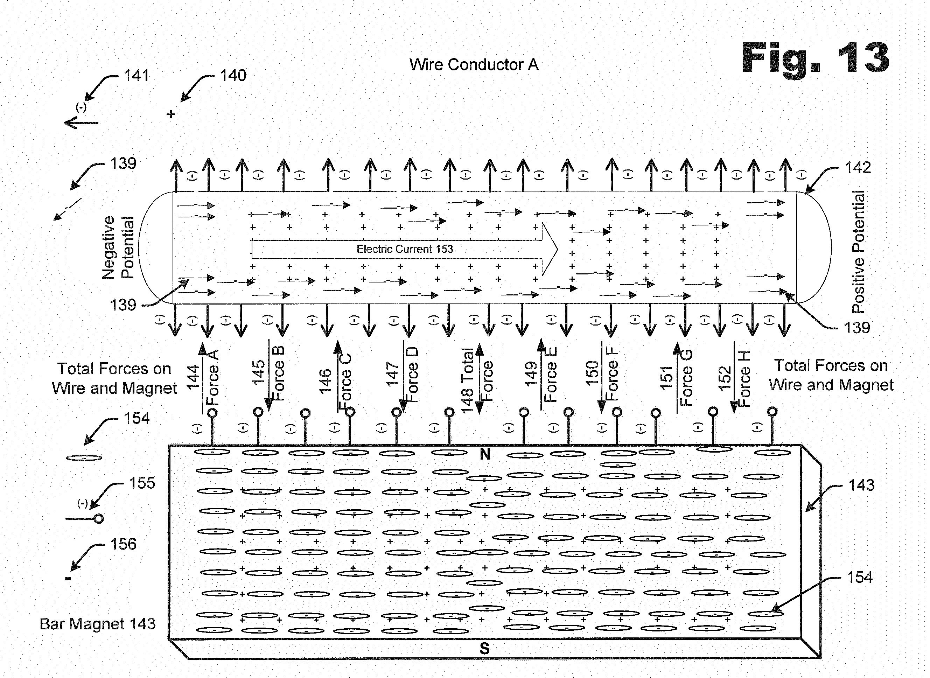

FIG. 13 illustrates mathematically the forces from the relativistic electric fields **141, 155** from a copper wire **142** conducting an electric current **139, 153** and a uniformly magnetized block **143** with aligned magnetic moments of the unpaired electrons **156** that are created from the infinitesimally small loops of current **154** from the unpaired elections **156** that are in close proximity of each other.

The moving negative charges **139** that form the electric current **153** moving to the right with a drift velocity of about 1 cm/second create a uniform relativistic electric field **141** around the round wire **142** from the moving negative **139** charges when they are viewed perpendicular to their drift velocity. The mathematical framework used today describes these differences as a separate magnetic field.

The unpaired electrons **156** that create the infinitesimally small loops of current **154** that make up the magnetic moment create a relativistic electric field **155** that is only observed above and below the plane of the unpaired electrons **156** motion that today is represented as a North Pole and South Pole of a magnetic field. When the plane of the unpaired electrons **156** is observed from the edge of the plane the infinitesimally small loops of current **154** the opposite direction of motions of the aligned unpaired electrons **156** that is observed create relativistic electric fields **155** that do not produce a force on the magnet.

The unpaired electrons **156** that create the infinitesimally small loops of current **154** that make up the magnetic moment are moving in a circle at a velocity that is in the range of 20,000 meters/second. The relativistic electric field **155** from the unpaired electrons **154** create a relativistic electric field **155** that is created from electric charges **154** that are in different inertial reference frames from the negative charges **139** flowing in the electric wire **142** that do not follow the same rules of superposition that static electric fields follow. The mathematical framework used today describes these differences as a separate magnetic field.

When the Wire **142** has an electric current **139** flowing through it that produces a positive electric field from the stationary positive charges **140** and a negative electric field **141** from the moving negative charges **139** that is modified by the effects of relativity. The interactions of these two electric fields, the two different charges **139, 140** create a total observed electric field **141** that is different depending on the view of the wire, the shape of the wire and the velocity of the drift electric current that is about 1 cm/sec for copper.

The bar magnetic **143** also has a positive electric field from the stationary positive charges **140** and a negative electric field from the unpaired electrons **154** that make up the magnetic moment. The interactions of these two different electric fields from the two different charges **154** and **140** create a total electric field **155** that is different depending on the view of the wire, the shape of the wire and the velocity of the electric current of 20,000 cm/sec that makes up the magnetic moment.

These differences create two difference or relativistic electric fields **155** and **141** that are created from charges in two different inertial reference frames that do not follow the same rules of superposition that the static charges follow. This then allows the positive charges **140** in the conductor **142** and the bar magnet **143** to observe different electric fields from the other objects negative charges with different velocities.

If the resulting force **148** on the wire **142** and the bar magnet **143** is determined from the interactions of these different electric fields, instead of using the framework based on the magnetic field, we have a framework that describe the forces observed from the conductor **142** and the bar magnet **143** as a separate set of equations. Determining forces **144** to **152** on the conductor **142** and the bar magnet **143** allow us to take into account the materials and shape of the conductor **142** and bar magnet **143** to determine the total force **148** on the conductor **142** and the bar magnet **143.**

Total force on the conductor **142** can be described by four electric field interactions with the bar magnet **143** that produces four forces on the conductor **142** as separate forces **144, 145, 146** and **147** that can be represented as:

$$\vec{F_A} + \vec{F_B} + \vec{F_C} + \vec{F_D} = Total\ force\ on\ conductor \qquad (EQN\ 55)$$

Repulsive force on the conductor **142** from the electric field interactions from the positive charges in the conductor **142** with the positive charges in the bar magnet **143** can represented as:

$$\vec{F_A} = \vec{F}\left[\vec{E}_{Conductor}(+) <=> \vec{E}_{Bar\ Magnet}(+)\right] \qquad (EQN\ 56)$$

Attractive force on the conductor **142** from the electric field interactions from the positive charges in the conductor **142** with the unpaired electrons **154** that make up the magnetic moment in the bar magnet **143** can represented as:

$$\overrightarrow{F_B} = \vec{F}\left[\vec{E}_{Conductor}(+) >=< \vec{E}_{Bar\ Magnet}(-)\right] \qquad \text{(EQN 57)}$$

Repulsive force on the conductor **142** from the electric field interactions from the moving negative charges that makeup the electric current in the conductor **142** with the unpaired electrons **154** that make up the magnetic moment in the bar magnet **143** can represented as:

$$\overrightarrow{F_C} = \vec{F}\left[\vec{E}_{Conductor}(-) <=> \vec{E}_{Bar\ Magnet}(-)\right] \qquad \text{(EQN 58)}$$

Attractive force on the conductor **142** from the electric field interactions from the moving negative charges that makeup the electric current in the conductor **142** with the positive charges in the bar magnet **143** can represented as:

$$\overrightarrow{F_D} = \vec{F}\left[\vec{E}_{Conductor}(-) >=< \vec{E}_{Bar\ Magnet}(+)\right] \qquad \text{(EQN 59)}$$

Then the total force on the bar magnet **143** is described by four electric field interactions with the conductor **142** that produces 4 separate forces **149, 150, 151, 152** on the bar magnet **143** that can be represented as:

$$\overrightarrow{F_E} + \overrightarrow{F_F} + \overrightarrow{F_G} + \overrightarrow{F_H} = Total\ force\ on\ \text{the}\ Bar\ Magnet \qquad \text{(EQN 60)}$$

Repulsive force on the bar magnet **143** from the electric field interactions from the positive charges in the conductor **142** with the positive charges in the bar magnet **143** can represented as:

$$\overrightarrow{F_E} = \vec{F}\left[\vec{E}_{Bar\ Magnet}(+) <=> \vec{E}_{Conductor}(+)\right] \qquad \text{(EQN 61)}$$

Attractive force on the bar magnet **143** from the electric field interactions from the positive charges **140** in the conductor **142** with the unpaired electrons **154** that make up the magnetic moment in the bar magnet **143** can represented as:

$$\overrightarrow{F_F} = \vec{F}\left[\vec{E}_{Bar\ Magnet}(-) >=< \vec{E}_{Conductor}(+)\right] \qquad \text{(EQN 62)}$$

Repulsive force on the bar magnet **143** from the electric field interactions from the moving negative charges that makeup the electric current in the conductor **142** with the unpaired electrons **154** that make up the magnetic moment in the bar magnet **143** can represented as:

$$\overrightarrow{F_G} = \vec{F}\left[\vec{E}_{Bar\ Magnet}(-) <=> \vec{E}_{Conductor}(-)\right] \qquad \text{(EQN 63)}$$

Attractive force on the bar magnet **143** from the electric field interactions from the moving negative charges that makeup the electric current in the conductor **142** with the positive charges in the bar magnet **143** can represented as:

$$\vec{F_H} = \vec{F}\left[\vec{E}_{Bar\,Magnet}(-) >=< \vec{E}_{Conductor}(+)\right] \qquad \text{(EQN 64)}$$

Determining the forces on these wires as 8 separate force vectors **144, 146, 149, 151, 145, 147, 150** and **152** allows these same forces to be modeled mathematically as a special case of a mathematical framework, with the simpler mathematical framework of a magnetic field with a magnetic force that creates the same force on the bar magnet **143** and the conductor **142** if any set of simple conditions are met.

The main condition that allows the simpler mathematical framework of a magnetic field to correctly describe the total force **148** between the bar magnet **143** and the conductor **142** is that there is a path for the mobile electrons in either the bar magnet **143** and the conductor **142** to migrate between the bar magnet **143** and the conductor **142** when the electric current is flowing thru the conductor as an electric current.

This path can be a static conductive or semi-conductive or high resistance path between the bar magnet **143** and the conductor **142**. This path can also be a charge transfer to a 3rd charge holding object that is in proximity to the bar magnet **143** and the conductor **142**. This 3rd charge object includes the earth ground or a ground plane that can be connected to either or both the bar magnet **143** and the conductor **142** by either an electrical means or by some mechanical means.

If there is not a path between the bar magnet **143** and the conductor **142** for the mobile electrons to migrate between them, then these forces **144, 146, 149, 151, 145, 147, 150** and **152** can be represented as interactions of electric fields from charges in different inertial reference frames that do not follow all the rules of superposition. Then that allows an assembly of conductors **142** and the bar magnet **143** to allow the forces **144, 146, 149, 151, 145, 147, 150** and **152** to not to sum to zero.

These conditions that allow the forces **144, 146, 149, 151, 145, 147, 150** and **152** to not to sum to zero allow for an electrostatic power supply to be used where all the source electrons are only derived from the conductor **142** and not from another source like earth ground or a source that has in the past derived its mobile electrons from earth ground or a source that is in the direction of the total force **148** on the conductor **142** and the bar magnet **143** by direct or indirect means.

When these conditions are met the positive charges **140** in the copper wire conductor **142** will observe an electric field **141** from the unpaired electrons **154** that make up the magnetic moment in the bar magnet **143** as:

$$\vec{E}_{Magnet} = 2\pi kL \left[\frac{\vec{v}_{20,000}\,m/s}{c\,m/s} \times \Phi\right]\left(1 - \frac{x}{(x^2+R^2)^{1/2}}\right)\frac{\text{Volts}}{\text{Meter}} \qquad \text{(EQN 65)}$$

The positive charges **140** in the bar magnet **143** will observe an electric field **155** from the round conductive copper wire **142** from the moving negative **139** charges as:

$$\vec{E}_{Current} = 2\pi kL \left[\frac{\vec{v}_{.001}\,m/s}{c} \times \Phi\right]\frac{\text{Volts}}{\text{Meter}} \qquad \text{(EQN 66)}$$

The velocity of the negative charges **154** and **139** are in different inertial reference frames in the copper wire conductor **142** and the bar magnet **143** so that these electric field differences will not follow the rules of superposition that static electric fields follow. These differences give rise to the magnetic force that the magnetic field was created to describe.

If the copper wire conductor **142** or the bar magnet **143** is made of different materials (e.g., Graphene, Nichrome, or a Superconductor), with different velocities for the negative charges, these materials would create different total electric field differences **155, 141** would generate total forces **148** the copper wire conductor **142** or the bar magnet **143** that is not taken into account with the mathematical framework based on the magnetic field.

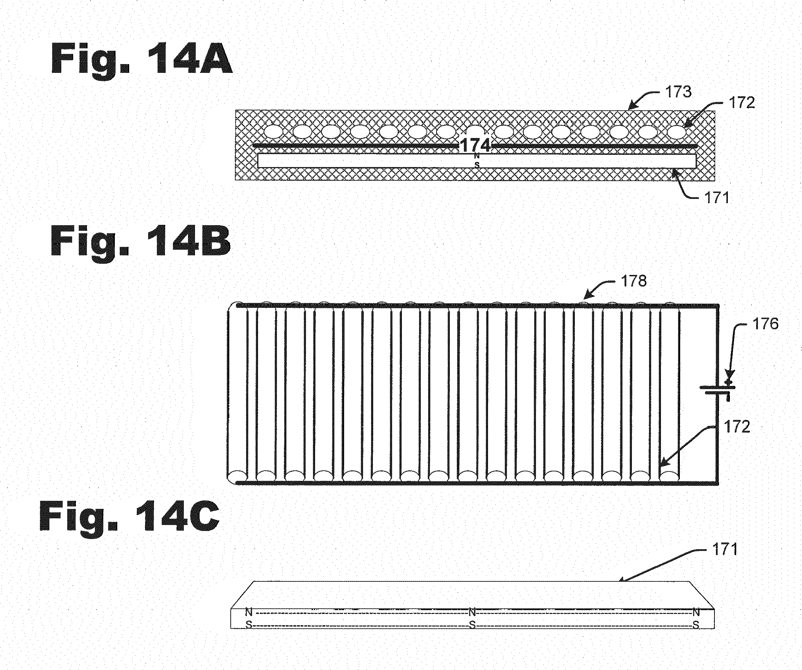

The shape is not represented in the mathematical framework based on the magnetic field that describe magnetic forces. The mathematical framework based on the magnetic field does not differentiate the forces observed from a cylindrical wire or a flat wire with the same amount of current for the same wire cross sectional area. **FIGS. 14A, 14B**

**and 14C** illustrate a cutaway view of an example assembly of one plane of wire conductors **172** and bar magnet **171** with power supplies and wiring diagram **178**, wherein (A) is an edge view of the wire conductors **172** and bar magnet in a non-conductive frame **173**, (B) is a top view of round copper wires **172** in a non-conductive frame **173**, and (C) is an angled view of the bar magnet **171**. The figures illustrate graphically an edge view of a sheet of square or round copper wires **172** and bar magnet **171** made of two different materials in a nonconductive frame **173**. The round copper wires **172** and bar magnet **171** are electrically isolated from each other by a non-conducting sheet **174** as an example of a sheet of Kapton.

The wires are powered by electrically isolated power supply **176** that is electrically isolated from earth ground or any other large ground plane. The physical diagram and schematic of the top sheet of the wires **178** diagrams the wires being powered in parallel by power supply **176**.

The schematic of the bar magnet **171** diagrams a magnet with the North Pole on the upper face and the South Pole on the bottom face. The bar magnet **171** is diagramed to have the majority the magnetic moments aligned vertical with the faces of the magnet and not have multiple different poles on the faces of the magnet. Other configurations are possible from the arrangement of poles in the magnet and placement of the wires.

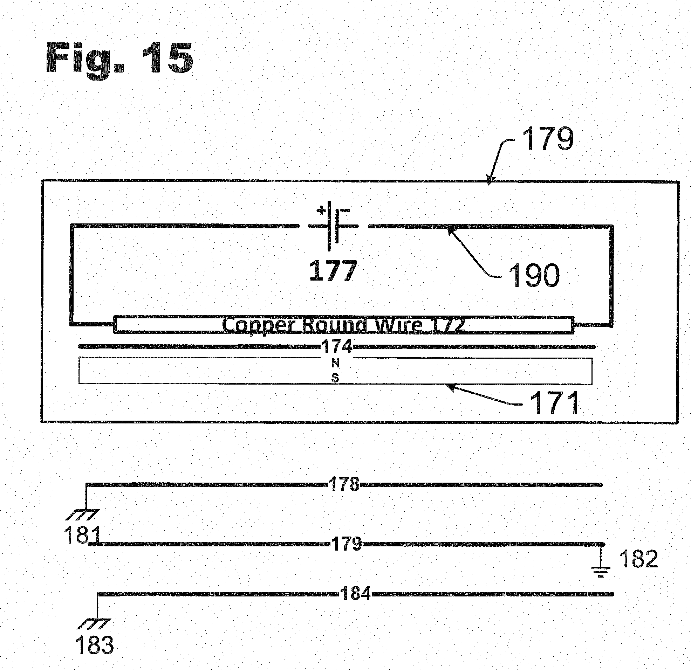

**FIG. 15** illustrates the electrical schematic of the electrical circuit of the assembly of **171, 172, 177, 174,** and **179**. The schematic also illustrates a method to isolate the assembly from the effects of external mobile charges migrating in response to the electric field differences that the assembly produces.

Earth ground **182** is connected to a conductive sheet **179**. Isolated ground or chassis ground **181, 183** are connected to semi-conductive sheets **178,184** that sandwiches the conducive sheet **179** between them. The assembly of sandwiched sheets **178,179** and **184** is placed between the earth ground and the assembly of **171, 172, 177, 174,** and **179**. The materials used for conductive sheets **178,179** and **184** can allow for higher drift velocities of the electronic current that is greater than is observed in conductive copper sheets for **178,179** and **184**.

The schematic diagrams the power supply **177** that powers the plane of the copper wires **172** thru the conductive wire **190** as physically above the plane of the copper wires **172** to mitigate the effects from charge migration.

The solid non-conductive assembly **179** contains the copper wire conductor **172**, the bar magnet **171**, power supply **177**, conductive wire **190**, and insulating sheet **174** as one solid unit.

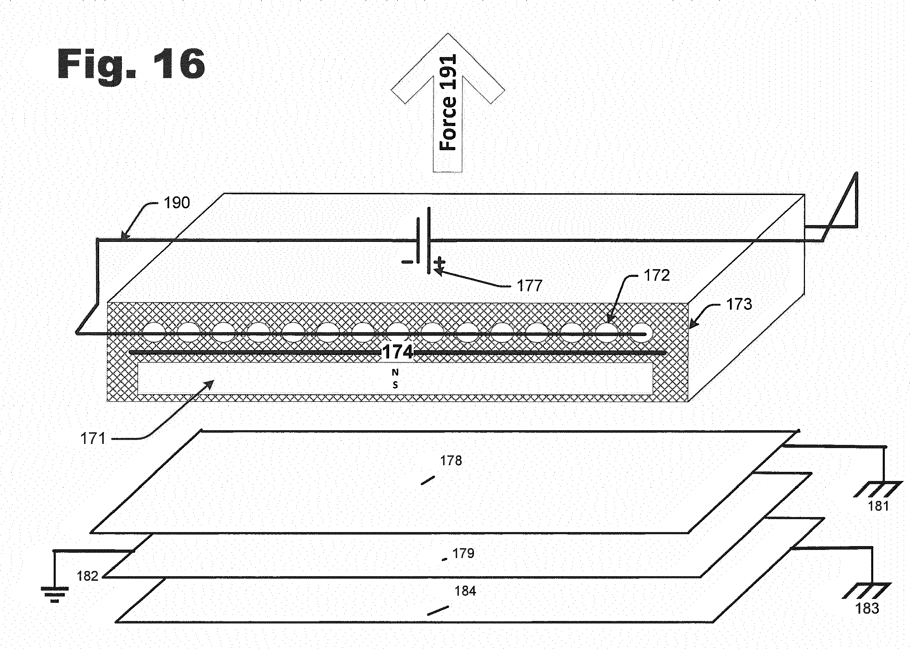

**FIG. 16** illustrates the electrical schematic of the electrical circuit and physical placement of the bar magnet **171**, the power supply **177** that powers the sheet of conductors **172**, and the external conductive sheets **178,179,184** that are placed between the earth/ground that shields charges from migrating in the earth to counter act the electric field differences that the device produces.

The relativistic electric fields from the aligned magnetic moments in the bar magnet **171** as compared to the relativistic electric fields from the motions of the electrons in the wires in the plane of wire conductors **172** have different electric fields that do not follow the rules of superposition such that the bar magnet **171** to observe different electric fields from the sheet of wire conductors **172** that is different than the sheet of wire conductors **172** observes from the bar magnet **171**.

These two different electric fields result in different forces to be observed from the bar magnet **171** and the plane of wire conductor **172**. This then results on a force **191** on the assembly that only requires the assembly to be powered by one electrically isolated power supply. To maximize the attractive or repulsive forces between the wires and magnetic materials the wires could be oriented as coils over the magnet. The resulting force **191** can be implemented to propel spacecraft using electricity only. The same force can also be implemented for any propulsion by a force to move an object with electricity in a vacuum or in any medium.

Derivation of Equations 1 and 2

In the following, the derivation of Equations (1) and (2) is set out.

Maxwell's equations that describe electromagnetic fields are based on vector calculus and have terms for magnetic field, and, thus, are not valid to describe the complex electric fields from electrical convention currents.

Maxwell's equations were originally derived by Oliver Heaviside from Maxwell's original bi-quaternion mathematical framework for electrodynamics. The following derivation is the modern derivation of the electric field and magnetic field equations from Maxwell's original bi-quaternion electromagnetic potential. The units for the modern derivation is the same units of the magnetic vector potential of Weber/Meter. The symbols and operators in the following equations are defined as follows:

Quaternion: $X = x_0 + ix_1 + jx_2 + kx_3$ or $X = x_0 + \vec{\imath}.\vec{x}$

Bi-Quaternion: $X = x_0 + iy_0 + \vec{\imath}.(\vec{x} + i\vec{y})$

$$\nabla = \left( \frac{i}{c}\frac{\partial}{\partial t} + \vec{\imath}.\vec{\nabla} \right) \qquad \vec{\nabla} = \left( \frac{\partial}{\partial x_1}, \frac{\partial}{\partial x_2}, \frac{\partial}{\partial x_3} \right)$$

Ø = electric potential (Volts)

$A$ = magnetic vector potential (Weber/metre)

$c$ = speed of light (metres/second)

$$\frac{\emptyset}{c} = A \quad \text{(Weber/metre)}$$

$\vec{V}$ = velocity vector (metres/second)

$Q$ = charge (Coulombs)

$r$ = distance to charge (metres)

The Quaternion Electromagnetic Potential: $A = \frac{i}{c}\emptyset + \vec{\imath}.\vec{A}$ Weber/metre Note: $x_0 = 0$, $i\vec{y} = 0$

$$\nabla A = \left(\frac{i}{c}\frac{\partial}{\partial t} + \vec{\imath}.\vec{\nabla}\right)\left(\frac{i}{c}\emptyset + \vec{\imath}.\vec{A}\right) \text{ Tesla}$$

$$\nabla A = \left(\frac{1}{c^2}\frac{\partial\emptyset}{\partial t} + \vec{\nabla}.\vec{A}\right) + \vec{\imath}.\left(\vec{\nabla}.\vec{A} + \frac{i}{c}\left(\frac{\partial\vec{A}}{\partial t} + \vec{\nabla}\emptyset\right)\right) \text{ Tesla}$$

The resulting equations are as follows:

$$\vec{E} = -\frac{\partial\vec{A}}{\partial t} - \vec{\nabla}\emptyset \text{ Volt/metre}$$

Note: $\frac{i}{c}\left(\vec{E}\right)$ Tesla

$$\vec{B} = \vec{\nabla} \times \vec{A} \text{ Tesla}$$

$$S = \frac{1}{c^2}\frac{\partial\emptyset}{\partial t} + \vec{\nabla}.\vec{A} \text{ Tesla}$$

The resulting equations are reformulated to derive the vector calculus based Maxwell's Equations. The first and second resulting equations shown above describe the electric and magnetic fields from current carrying conductors. The third equations shown above is referred to as the magnetic scalar equation. The effects of the third equation are not observed for conduction currents, and thus have their terms rationalized to be equal to zero to derive the Coulomb and Lorentz gauges. The reason that the magnetic scalar is not observed for conduction currents are first due to low speeds of drift electrons in conductors used today (usually about 1 cm/second). In addition, the units are incorrect for the magnetic scalar and such isn't measurable with a magnetic field meter.

To arrive at the correct mathematical framework for convection currents, these equations are re-derived from Maxwell's original bi-quaternion electromagnetic potential to eliminate the terms for magnetic field. As such, Maxwell's original bi-quaternion electromagnetic potential is converted to the electrodynamic potential having units of Volts instead of Weber/Metre. To change the units, the following derivation is used, multiplying the magnetic vector potential by c (the speed of light) to convert to volts.

Quaternion Electromagnetic Potential:

$$A = \frac{i}{c}\emptyset + \vec{\imath}.\vec{A} \quad \text{Weber/metre}$$

$$cA = \frac{ci}{c}\emptyset + \vec{\imath}.c\vec{A} \quad \text{Volts}$$

$$cA = \emptyset \quad \text{Volts}$$

$$\emptyset = i\emptyset + \vec{\imath}.c\vec{A} \quad \text{Volts}$$

The following conversion may be used to change all the terms into the same form:

$$\vec{A} = \frac{\mu_0 Q\vec{V}}{4\pi r} \quad \text{Weber/metre}$$

$$c = \frac{1}{\sqrt{\mu_0 \varepsilon_0}} \quad \text{metres/second} \quad \text{Note: } \mu_0 = \frac{1}{\varepsilon_0 c^2}$$

$$\vec{cA} = \frac{c\mu_0 Q\vec{V}}{4\pi r} \quad \text{(Weber x metre / second x metre) or Volts}$$

$$\vec{cA} = \frac{cQ\vec{V}}{\varepsilon_0 c^2 4\pi r} \quad \text{Volts}$$

$$\vec{cA} = \frac{\vec{V}}{c}\frac{Q}{\varepsilon_0 4\pi r} \quad \text{Volts}$$

$$\emptyset = \frac{Q}{4\pi \varepsilon_0 r} \quad \text{Volts}$$

$$c\vec{A} = \frac{\vec{V}}{c}\emptyset \quad \text{Volts}$$

The Quaternion Electrodynamic Potential for a moving charged object is defined by:

$$\emptyset = i\emptyset + \vec{\imath}.\frac{\vec{V}}{c}\emptyset \quad \text{Volts}$$

$$\nabla\emptyset = \left(\frac{i}{c}\frac{\partial}{\partial t} + \vec{\imath}.\vec{\nabla}\right)\left(i\emptyset + \vec{\imath}.\frac{\vec{V}}{c}\emptyset\right) \quad \text{Volts/metre}$$

$$\nabla \emptyset = \left( \frac{\partial}{\partial t} \frac{\emptyset}{c} + \vec{\nabla} . \frac{\vec{v}}{c} \emptyset \right) + \vec{\iota} . \left( \vec{\nabla} . \frac{\vec{v}}{c} \emptyset + i \left( \frac{\partial \vec{v}}{\partial t} \frac{\emptyset}{c^2} + \nabla \emptyset \right) \right) \text{ Volts/metre}$$

It is noted that the examples shown and described are provided for purposes of illustration and are not intended to be limiting. Still other examples are also contemplated.

## Claims

1. A method comprising:

   providing in an assembly a first conductor of a first shape and a second conductor of a second shape that is different than the first shape, wherein the first and second conductors are stationary relative to one another and electrically isolated from one another;
   supplying an electrical current to each of the first and second conductors from respective independent electrically isolated power sources, whereby a first force experience by the first conductor from the current flowing through the second conductor is different from a second force experienced by the second conductor from the current flowing through the first conductor, thereby producing in the assembly a difference force capable of causing motion of the assembly.

2. A method according to claim 1, wherein each conductor is elongate with a cross-sectional dimension which has a thickness that is a fraction of its width and a smaller fraction of its length, the width of the conductor being sized such that the electric current is uniform across the surface of the conductor.

3. A method according to claim 1 or 2, wherein a surface of the first conductor arranged alongside and facing a surface of the second conductor the first and second conductors being spaced apart by as minimum distance which is sufficient to keep the first and second conductor from being electrically connected to one another and to prevent electric charge from leaking from the first conductor to the second conductor.

4. A method according to any preceding claim, wherein the second conductor has a non-flat ribbon surface that is facing the first conductor, and the first conductor has a flat smooth ribbon surface that is facing the second conductor.

5. A method according to any preceding claim, wherein the first conductor is made of a first type of conductive material, and the second conductor is made of a second different type of conductive material that has an electronic drift velocity or charge mobility that is less than the first conductor's electron drift velocity or charge mobility of the first type of conductive material.

6. A method according to claim 5, wherein the first type of conductive material is graphene and the second type of conductive material is copper or conductive silver epoxy.

7. A method according to any preceding claim, wherein the first and second conductors are electrically isolated by separating them with a material with a high dielectric constant.

8. A method according to claim 7, wherein the material with a high dielectric constant is Kapton.

9. A method according to any preceding claim, wherein the conductors are charged by a third power source that has an infinite source impedance to increase the amount of electric charge that can be used to produce the difference force.

10. A method according to claim 1, wherein the first conductor is a ribbon conductor with a flat smooth surface and the second conductor is selected from a shape comprising:

    a conductive sphere, a conductive half sphere, a conductive oval, a conductive curved shape, a conductive non-smooth surface and, a curved or rippled surface comprising conductive spheres or platelets.

11. A method according to claim 1, wherein the first conductor is a thin flat wire and the second conductor is wire having a cross-sectional dimension larger than that of the thin flat wire, and presenting a curved surface to a surface of the first conductor.

12. A unitary body comprising:

a housing;

at least one first conductor of a first shape fixedly mounted with respect to the housing;
at least one second conductor of a second shape different to the first shape fixedly mounted to the housing and spaced from the first conductor by a fixed distance;
a first power source fixedly mounted with respect to the housing and connected to cause an electric current to flow through the first conductor;
a second power source electrically isolated from the first power source and fixedly mounted with respect to the housing, the second power source connected to cause an electric current to flow through the second conductor, wherein the distance between the first and second conductors is such that the first conductor experiences a first force as a result of an electric field from the current in the second conductor and the second conductor experiences a second force as a result of an electric field from the current in the first conductor which is different to the first force, whereby a net force, being the difference between the first and second forces, causes motion of the unitary body.

13. A unitary body according to claim 12 wherein the first and second conductors are elongate conductors which are arranged in parallel such that a long surface of the first conductor faces a long surface of the second conductor and is spaced apart by the fixed distance.

14. A unitary body according to claim 12 or 13 comprising multiple elongate first conductors arranged in parallel in a plane of first conductors, and multiple elongate second conductors arranged in parallel in a second plane of second conductors, the first and second planes being arranged such that the surfaces of the first conductors face surfaces of the second conductors and are spaced apart by the fixed distance.

15. A unitary body according to claim comprising a component of electrically insulating material placed between the first and second planes to electrically isolate the first conductor from the second conductors.

# Fig. 1A

# Fig. 1B

# Fig. 2

Positive Voltage

14

9

Negative Voltage

13

10 DC

11

5

6

8

-S(A)

+S(R)

7

15

12

# Fig. 3A

# Fig. 3B

Negative Potential

Positive Potential

Fig. 4

EP 3 358 728 A1

# Fig. 5

Wire Conductor A — 36

I Electric Current 41

Magnetic Force 38

D 39

D 39

I Electric Current 42

Wire Conductor B

— 37

Length
L 40

— 34

— 33

35 —

(-)

# Fig. 6A

# Fig. 6D

# Fig. 6B

# Fig. 6C

Electric Field Amplification

# Fig. 7A

Electric Current A 62 — 60

61

Electric Current B 63

# Fig. 7B

56

66

60

(-)
-(-)-
--(-)--
--(-)--

64

(-)
(-)
(-)
(-)
(-)

58

(-)

59

-

67

Force B 70

Force A 69

57

+

61

65

68

**Fig. 8A**

**Fig. 8B**

**Fig. 8C**

# Fig.9

76

Copper Round Wire 72

Graphene Square Wire 71

77

Fig. 10

EP 3 358 728 A1

# Fig. 11C

116
119
117
121
123

116
121
115
+123
115

116
119
123
119
121

# Fig. 11A

124

# Fig. 11B

118
125

# Fig. 12

**Fig. 13**

Fig. 14A

Fig. 14B

Fig. 14C

# Fig. 15

EP 3 358 728 A1

**Fig. 16**

Force 191

190

177

172

173

174
N
S

171

178

179

184

182

181

183

EP 3 358 728 A1

Fig. 17A

Fig. 17B

Fig. 17C

Europäisches
Patentamt

European
Patent Office

Office européen
des brevets

# EUROPEAN SEARCH REPORT

Application Number

EP 18 15 4781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/085411 A1 (QIANG ZHU [US]) 2 April 2009 (2009-04-02) * paragraphs [0028], [0029]; claim 1; figures 1,2 * ----- | 1,3,7, 12,15 | INV. H02K99/00 |

TECHNICAL FIELDS
SEARCHED    (IPC)

H02K

The present search report has been drawn up for all claims

| Place of search | Date of completion of the search | Examiner |
|---|---|---|
| Munich | 6 June 2018 | Fromm, Udo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 4781

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2018

| Patent document cited in search report | Publication date | Patent family member(s) | Publication date |
|---|---|---|---|
| US 2009085411 A1 | 02-04-2009 | US 2009085411 A1<br>WO 2010018558 A2 | 02-04-2009<br>18-02-2010 |

EPO FORM P0459

For more details about this annex : see Official Journal of the European Patent Office, No. 12/82

**EP 3 358 728 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2017203604
- US 42227017 A
- US 15653130 B